(19) Europäisches Patentamt / European Patent Office / Office européen des brevets

(11) **EP 3 337 114 B1**

(12) **EUROPEAN PATENT SPECIFICATION**

(45) Date of publication and mention
of the grant of the patent:
**21.09.2022 Bulletin 2022/38**

(21) Application number: **16306691.3**

(22) Date of filing: **15.12.2016**

(51) International Patent Classification (IPC):
**H04L 27/26** (2006.01)

(52) Cooperative Patent Classification (CPC):
**H04L 27/2666**

(54) **COMBINING DIFFERENT OFDM NUMEROLOGIES IN ONE BAND**

OFDM-MODULATOR, OFDM-DEMODULATOR, VERFAHREN ZUM BETRIEB EINES
OFDM-MODULATORS UND VERFAHREN ZUM BETRIEB EINES OFDM-DEMODULATORS

MODULATEUR OFDM, DÉMODULATEUR OFDM, PROCÉDÉ D'UTILISATION D'UN MODULATEUR
OFDM ET PROCÉDÉ D'UTILISATION D'UN DÉMODULATEUR OFDM

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**20.06.2018 Bulletin 2018/25**

(73) Proprietor: **Alcatel Lucent
91620 Nozay (FR)**

(72) Inventors:
• **Rheinschmitt, Rupert
70435 Suttgart (DE)**
• **Fuchs, Rolf
70435 Suttgart (DE)**

(74) Representative: **DREISS Patentanwälte PartG
mbB
Friedrichstraße 6
70174 Stuttgart (DE)**

(56) References cited:
**US-A1- 2016 352 551**

• ZHANG XI ET AL: "Filtered-OFDM - Enabler for
Flexible Waveform in the 5th Generation Cellular
Networks", 2015 IEEE GLOBAL
COMMUNICATIONS CONFERENCE
(GLOBECOM), IEEE, 6 December 2015
(2015-12-06), pages 1-6, XP032873005, DOI:
10.1109/GLOCOM.2014.7417854 [retrieved on
2016-02-23]

• INTEL CORPORATION: "Multiplexing of different
numerologies for forward compatibility", 3GPP
DRAFT; R1-167124 NR NUMEROLOGY
MULTIPLEXING, 3RD GENERATION
PARTNERSHIP PROJECT (3GPP), MOBILE
COMPETENCE CENTRE ; 650, ROUTE DES
LUCIOLES ; F-06921 SOPHIA-ANTIPOLIS
CEDEX ; FRANCE , vol. RAN WG1, no.
Gothenburg, Sweden; 20160822 - 20160826 13
August 2016 (2016-08-13), XP051133001,
Retrieved from the Internet:
URL:http://www.3gpp.org/ftp/tsg_ran/WG1_RL
1/TSGR1_86/Docs/ [retrieved on 2016-08-13]

• Erik Dahlman ET AL: "New 5G Radio-Access
Technology" In: "4g, LTE Evolution and the Road
to 5G", 1 January 2016 (2016-01-01), Elsevier,
XP55380548, ISBN: 978-0-12-804575-6 pages
547-573, DOI:
10.1016/B978-0-12-804575-6.00024-8,

• NOKIA ET AL: "On the URLLC transmission
formats for NR TDD", 3GPP DRAFT; R1-167269,
3RD GENERATION PARTNERSHIP PROJECT
(3GPP), MOBILE COMPETENCE CENTRE ; 650,
ROUTE DES LUCIOLES ; F-06921
SOPHIA-ANTIPOLIS CEDEX ; FRANCE , vol. RAN
WG1, no. Gothenburg, Sweden; 20160822 -
20160826 12 August 2016 (2016-08-12),
XP051142024, Retrieved from the Internet:
URL:http://www.3gpp.org/ftp/tsg_ran/WG1_RL
1/TSGR1_86/Docs/ [retrieved on 2016-08-12]

- NOKIA ET AL: "Subband-wise filtered OFDM for New Radio below 6 GHz", 3GPP DRAFT; R1-165014, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Nanjing, P.R. China; 20160523 - 20160527 13 May 2016 (2016-05-13), XP051096698, Retrieved from the Internet: URL:http://www.3gpp.org/ftp/tsg_ran/WG1_RL 1/TSGR1_85/Docs/ [retrieved on 2016-05-13]
- AT&T: "Summary of Link Level Analysis of Candidate Waveforms for NR", 3GPP DRAFT; R1-1609383, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Lisbon, Portugal; 20161010 - 20161014 9 October 2016 (2016-10-09), XP051149426, Retrieved from the Internet: URL:http://www.3gpp.org/ftp/Meetings_3GPP_ SYNC/RAN1/Docs/ [retrieved on 2016-10-09]
- Erik Dahlman ET AL: "New 5G Radio-Access Technology" In: "4g, LTE Evolution and the Road to 5G", 1 January 2016 (2016-01-01), Elsevier, XP055380548, ISBN: 978-0-12-804575-6 pages 547-573, DOI: 10.1016/B978-0-12-804575-6.00024-8,
- QUALCOMM: "Scaled CP vs ECP: delay spread, Doppler and SNR tradeoff study", 3GPP DRAFT; R1-1610126_SCALED CP VS ECP DELAY SPREAD DOPPLER AND SNR TRADEOFF STUDY, 3RD GENERATION PARTNERSHIP PROJECT (3GPP), MOBILE COMPETENCE CENTRE ; 650, ROUTE DES LUCIOLES ; F-06921 SOPHIA-ANTI , vol. RAN WG1, no. Lisbon, Portugal; 20161010 - 20161014 9 October 2016 (2016-10-09), XP051150150, Retrieved from the Internet: URL:http://www.3gpp.org/ftp/Meetings_3GPP_ SYNC/RAN1/Docs/ [retrieved on 2016-10-09]
- CHRISTIAN PIETSCH ET AL: "EPoC Downstream Pilot Proposal ; pietsch_3bn_01_0313", IEEE DRAFT; PIETSCH_3BN_01_0313, IEEE-SA, PISCATAWAY, NJ USA, vol. 802.3bn, 16 March 2013 (2013-03-16), pages 1-10, XP068052838, [retrieved on 2013-03-16]
- NEC: "Discussion on PSS/SSS/PBCH in numerology multiplexing", 3GPP DRAFT; R1-1611716 PSS-SSS-PBCH IN NUMEROLOGY MULTIPLEXING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Reno, USA; 20161114 - 20161118 4 November 2016 (2016-11-04), XP051189148, Retrieved from the Internet: URL:http://www.3gpp.org/ftp/tsg_ran/WG1_RL 1/TSGR1_87/Docs/ [retrieved on 2016-11-04]
- HUAWEI ET AL: "Initial access in NR", 3GPP DRAFT; R2-163923 INITIAL ACCESS IN NR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Nanjing, China; 20160523 - 20160527 22 May 2016 (2016-05-22), XP051105295, Retrieved from the Internet: URL:http://www.3gpp.org/ftp/Meetings_3GPP_ SYNC/RAN2/Docs/ [retrieved on 2016-05-22]

**Description**

**Field of the invention**

The present disclosure is directed to an OFDM-modulator, an OFDM-demodulator, a method to operate an OFDM-modulator, and a method to operate an OFDM-demodulator.

**Background**

Evolving radio communications standards like 5G permit an efficient multi-cell / multi-TP (transmission point) support of mixed numerologies, namely mixed subcarrier configurations. 5G in general and specifically 3GPP New Radio targets multi-service support within one carrier. As the different service use cases are very different from each other, they motivate a variety of OFDM basic parameter sets, so called numerologies.

US2016352551 discloses for a wireless communications system, scalable orthogonal frequency division multiplexing (OFDM) numerology being incorporated in a manner that can apply to radio link transmissions in future wireless network for frequency division duplex (FDD) and time division duplex (TDD) communications.

3GPP TSG-RAN WG2 Meeting #94; HUAWEI ET AL: "Initial access in NR",3GPP DRAFT; R2-163923, Nanjing, China, 23 - 27 May, 2016 discusses different numerologies and synchronization signals. An individual initial access is used for each numerology.

Summary

A plurality of numerologies in the sense of different block lengths may exist in the OFDM-symbol of the main block length. This coexistence of different numerologies allows partially shorter symbol lengths with a corresponding increase in usable bandwidth. As the shorter symbols are mapped into longer symbols, there is no loss of transmission capacity. A new degree of freedom for scheduling radio transmissions is therefore available. Moreover a plurality of quality of service classes can be supported and increased performance requirements can be fulfilled.

According to an advantageous embodiment the second block length of the second inverse Fast Fourier Transform multiplied with an integer factor equals the first block length of the first inverse Fast Fourier Transform. This allows combining the plurality of modulation/demodulation systems with different FFT/IFFT lengths on a fixed subcarrier grid. Moreover, this scheme maintains orthogonality with respect to the basic subcarrier grid.

According to an advantageous embodiment the first block length equals 2048. This allows operating and scheduling LTE legacy devices in the same radio cell with radio devices comprising the proposed OFDM-modulator and/or OFDM-demodulator. This scheme therefore supports a migration from 4G/LTE to 5G.

According to an advantageous embodiment the processor and the memory are further configured to: repeat the synchronization sequence across the available bandwidth as a synchronization signal. Therefore, synchronisation across a plurality of systems with different block lengths and different frequency offsets is feasible.

The processor and memory are further configured to: operate with a physical resource block length of $2^X$ subcarriers; insert a first plurality of reference symbols into the first ingress modulation-symbol stream at each $2^Z$ subcarrier position; insert a second plurality of reference symbols into the second ingress modulation-symbol stream at each $2^Z$ subcarrier positions and at further positions derived via a single shift operation of the $2^Z$ grid positions. Consequently, the reference symbols can be seen and exploited in systems of different FFT/IFFT length and different frequency offset. Therefore, channel estimation benefits.

According to an advantageous embodiment the processor and memory are further configured to: operate with a physical resource block length of 12 subcarriers; insert a first plurality of reference symbols into a first ingress modulation-symbol of a slot at each sixth subcarrier; insert a second plurality of reference symbols into a fifth ingress modulation-symbol of a slot at each third subcarrier. This allows the mentioned LTE backward compatibility for operating the legacy LTE device in the same radio cell with radio devices comprising the proposed OFDM-modulator and/or OFDM-demodulator. This reference symbols scheme is compatible with LTE/4G.

A plurality of numerologies in the sense of different block lengths may exist in a single OFDM-symbol of the main block length. This coexistence of different numerologies allows partially shorter symbol lengths with a corresponding increase in occupied bandwidth. As the shorter symbols are mapped into longer symbols, there is no loss of transmission capacity. A new degree of freedom is therefore available for scheduling radio transmissions. Moreover a plurality of quality of service classes can be supported and increased performance requirements with regard to shorter latency can be fulfilled.

According to an advantageous embodiment the second block length of the second forward Fast Fourier Transform multiplied with an integer factor equals the first block length of the first forward Fast Fourier Transform. This allows combining the plurality of modulation/demodulation systems with different FFT/IFFT lengths on a fixed subcarrier grid.

Moreover, this scheme maintains orthogonality with respect to the basic subcarrier grid. According to an advantageous embodiment the first block length equals 2048. This allows operating and scheduling LTE legacy devices in the same radio cell with radio devices comprising the proposed OFDM-modulator and/or OFDM-demodulator. This scheme therefore supports a migration from 4G/LTE to 5G.

At least a component of a synchronization signal is determined in dependence on the second egress demodulation-symbol stream. Therefore, synchronisation across a plurality of systems with different FFT lengths and different frequency offsets is feasible.

According to an advantageous embodiment the processor and memory are further configured to: operate with a physical resource block length of $2^X$ subcarriers; determine a first plurality of reference symbols from the first egress demodulation-symbol stream at each $2^Z$ subcarrier position; determine a second plurality of reference symbols from the second egress demodulation-symbol stream at each $2^Z$ subcarrier positions and at further positions between the $2^Z$ subcarrier positions derived via a single shift operation of the $2^Z$ grid positions. Consequently, the reference symbols can be seen and exploited in systems of different FFT length and different frequency offset. Therefore, channel estimation benefits.

According to an advantageous embodiment the processor and memory are further configured to: operate with a physical resource block length of 12 subcarriers; determine a first plurality of reference symbols from egress demodulation-symbols of a slot at each sixth subcarrier; determine a second plurality of reference symbols from egress demodulation-symbols of a slot at each third subcarrier. This allows the mentioned LTE backward compatibility for operating the legacy LTE device in the same radio cell with radio devices comprising the proposed OFDM-modulator and/or OFDM-demodulator. This reference symbols scheme is compatible with LTE/4G.

A further object of the description is to propose a method to operate an OFDM-modulator.

A further object of the description is to propose a method to operate an OFDM-demodulator.

## Brief description of the figures

Figure 1a, 1b, 3 to 6 show a schematic block diagram of an ODFM-modulator or an OFDM-demodulator, respectively;
Figures 1c, 1d show a schematic sequence diagram, respectively;
Figure 2 shows a schematic cellular radio communications network;
Figure 7, 11 shows a schematic representation of a joined modulation-symbol stream, respectively;
Figure 8, 9 and 10 show schematically an inverse Fast Fourier Transform block, respectively;
Figure 12 shows a schematic representation of IFFT processing formats, respectively;
Figure 13, 14 show a schematic time-frequency representation of synchronisation signals, respectively;
Figure 15, 16, 17 show an exemplary reference symbol allocation scheme, respectively;
Figure 18, 19 show schematically a scheduling scheme, respectively; and
Figure 20, 21 show a schematic block diagram for operating a multi-service device, respectively.

## Description of the embodiments

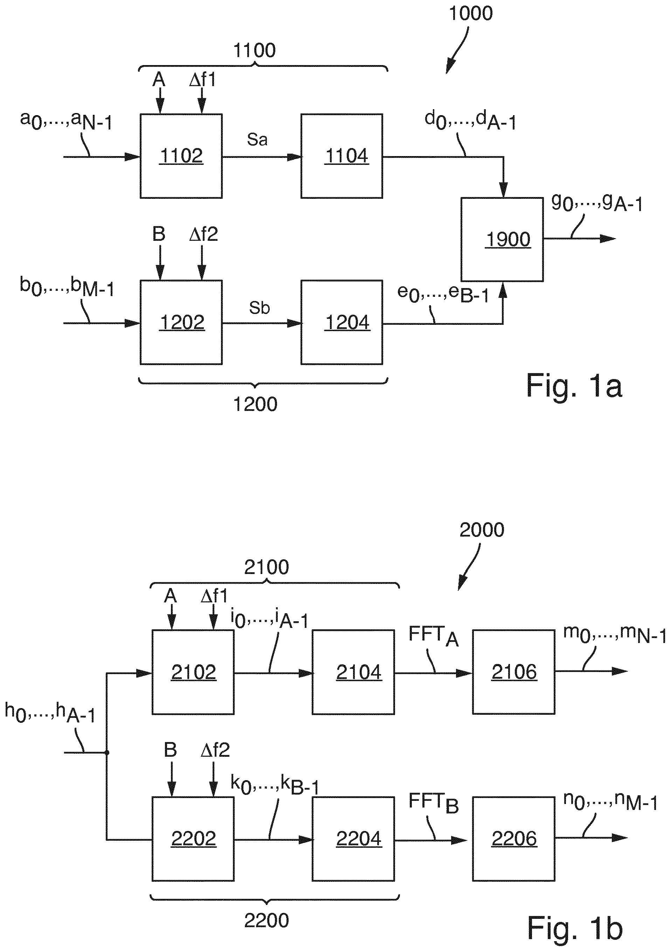

Figure 1a shows a schematic block diagram of an OFDM-modulator 1000 with a first processing chain 1100 and a second processing chain 1200. A first block 1102 of the first processing chain 1100 receives a first ingress modulation-symbol stream $a_0,...,a_{N-1}$ and determines a first inverse Fast Fourier Transform $IFFT_A$ of a first block length A and of a first frequency offset $\Delta f1$ to a subcarrier frequency. The first block 1102 assigns the individual modulation-symbols to a set of resource blocks occupying one or more subbands. When referring to a block length of an FFT and/or IFFT the terms FFT length and IFFT length can be used. A first inverse Fast Fourier Transform is determined from the first ingress modulation-symbol stream $a_0,...,a_{N-1}$. Then first frequency-shifted samples Sa are determined by frequency-shifting the first inverse Fast Fourier Transform of the first ingress modulation-symbol stream $a_0,...,a_{N-1}$ by the first frequency offset $\Delta f1$. As a result, a whole subband is used by the first inverse Fast Fourier Transform. A second block 1104 of the first processing chain 1100 receives the first frequency-shifted samples Sa and determines a first egress sample stream $d_0,...,d_{A-1}$.

A first block 1202 of the second processing chain 1200 receives a second ingress modulation-symbol stream $b_0,...,b_{M-1}$ and determines second frequency-shifted samples Sb of a second block length B, different from the first block length A, and of a second frequency offset $\Delta f2$ to the subcarrier frequency. The first block 1202 assigns the individual modulation-symbols to a set of resource blocks occupying one or more subbands. An inverse Fast Fourier Transform is determined from the second ingress modulation-symbol stream $b_0,...,b_{M-1}$. Then the second frequency-shifted samples Sb are determined by frequency-shifting the inverse Fast Fourier Transform of the second ingress modulation-symbol stream $b_0,...,b_{M-1}$ by the second frequency offset $\Delta f2$. As a result, a whole subband is used by the second inverse Fast Fourier Transform $IFFT_B$. A second block 1204 of the second processing chain 1200 receives the second frequency-shifted samples Sb and determines a second egress sample stream $e_0,...,e_{B-1}$. A block 1900 determines a joined sample stream $g_0,...,g_{A-1}$ in dependence on the first and second egress sample streams $d_0,...,d_{A-1}, e_0,...,e_{B-1}$ for up-converting the joined sample stream $g_0,...,g_{A-1}$ to a carrier frequency higher than respective subcarrier frequencies.

According to this description a modulation-symbol represents a complex value. A modulation-symbol stream represents a plurality of modulation-symbols in a sequence in time. The same applies to a sample stream. Moreover, the modulation-symbol is processed in a modulator. The demodulation-symbol is processed in a demodulator.

The wording ingress and egress have the following meaning: The ingress symbol stream, for example the ingress modulation-symbol stream, is located toward an input side of the respective processing entity, for example a processing chain. The egress symbol stream is located toward an output side of the processing entity, for example a processing chain. Therefore, the ingress symbol stream may differ from an actual input symbol stream at the beginning of the processing chain. The same applies to the egress symbol stream. So, when referring to a symbol stream this symbol stream refers to time or frequency domain.

Moreover the wording block length of a Fourier Transform can be used interchangeably with the wording length of a Fourier Transform or FFT length or IFFT length.

Figure 1b shows schematic block diagram of an OFDM-demodulator 2000. A down-converted sample stream $h_0,...,h_{A-1},...$ is received from an A/D-converter of the respective radio module R1, R2. A block 2102 of a first processing chain 2100 determines a first ingress sample stream $i_0,...,i_{A-1}$ of the first block length A in dependence on the down-converted sample stream $h_0,...,h_{A-1},...$ and in dependence on the first frequency offset $\Delta f1$ to the subcarrier frequency, wherein the first ingress sample stream $i_0,...,i_{A-1}$ is back shifted in frequency by the first frequency offset $\Delta f1$. A block 2104 determines a first forward Fast Fourier Transform $FFT_A$ of the first block length A in dependence on the first ingress sample stream $i_0,...,i_{A-1}$. A block 2106 determines a first egress demodulation-symbol stream $m_0,...,m_{N-1}$ in dependence on the first forward Fast Fourier Transform $FFT_A$.

A block 2202 of a second processing chain 2200 determines a second ingress sample stream $k_0,...,k_{B-1}$ in dependence on the down-converted sample stream $h_0,...,h_{A-1},...$ of the second block length B and in dependence on the second frequency offset $\Delta f2$ to the subcarrier frequency, wherein the second ingress sample stream $k_0,...,k_{B-1}$ is back-shifted in frequency by the second frequency offset $\Delta f2$. A block 2204 determines a second forward Fast Fourier Transform $FFT_B$ of the second block length B in dependence on the second ingress sample stream $k_0,...,k_{B-1}$. A block 2206 determines a second egress demodulation-symbol stream $n_0,...,n_{M-1}$ in dependence on the second forward Fast Fourier Transform $FFT_B$.

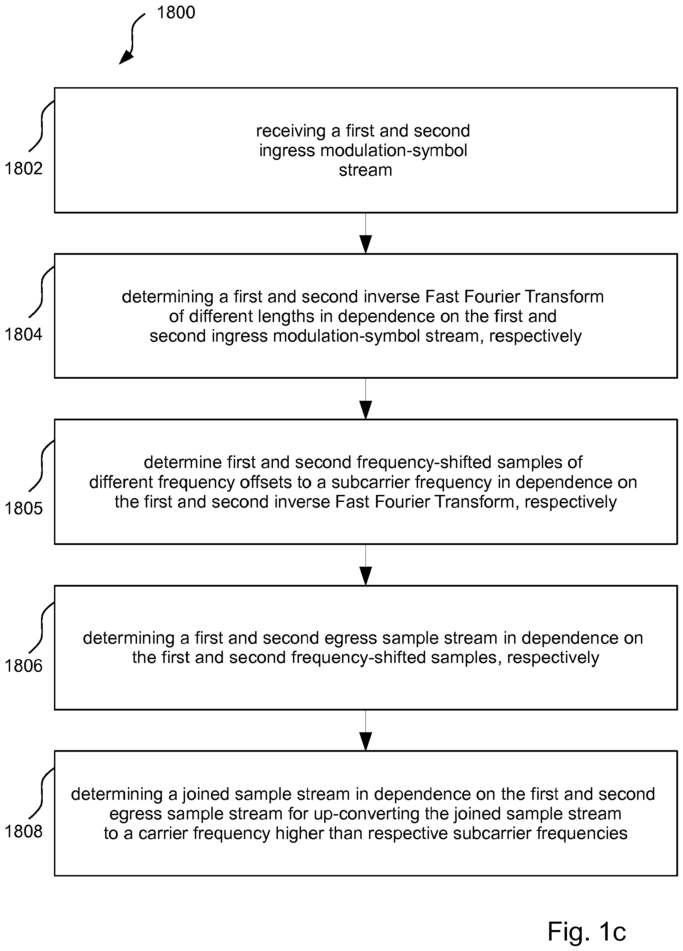

Figure 1c shows a schematic sequence diagram 1800 to operate the ODFM-modulator 1000 comprising steps 1802, 1804, 1805, 1806 and 1808.

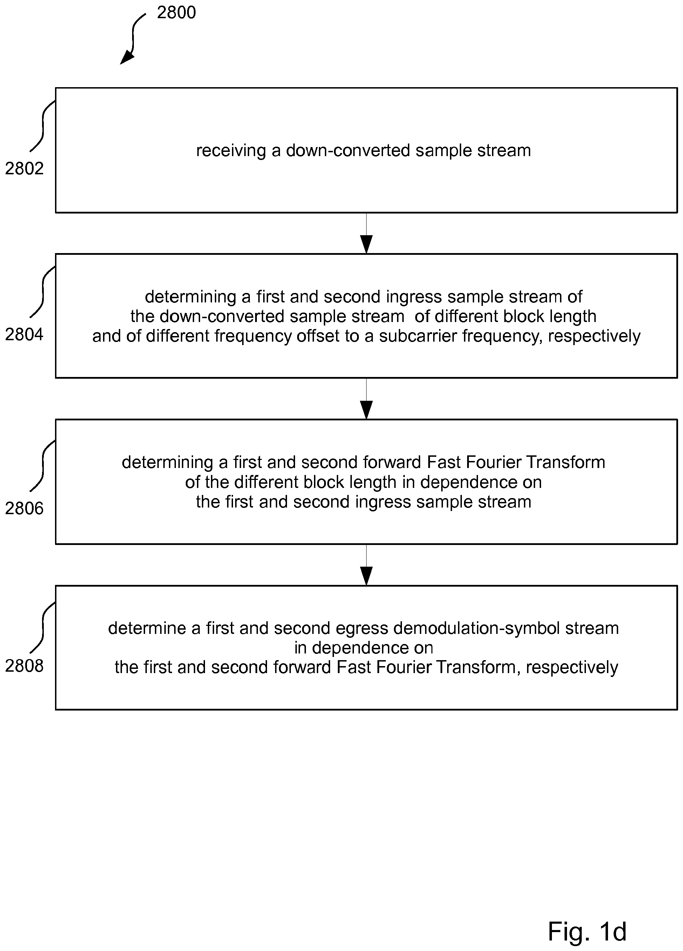

Figure 1d shows a schematic sequence diagram 2800 to operate an OFDM-demodulator 2000 comprising steps 2802, 2804, 2806 and 2808.

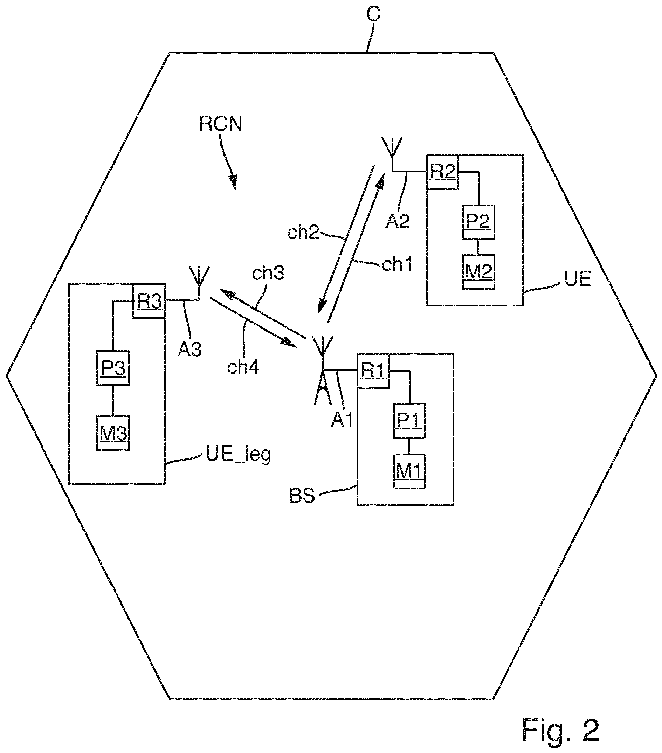

Figure 2 shows a schematic cellular radio communications network RCN. The cellular radio communications network RCN is a cellular network, wherein the first radio device BS establishes a radio cell C. The first radio device BS is a base station, a LTE eNodeB, a 5G transmission point, a WiFi access point, a remote radio head, RRH, or else. The first radio device BS is in particular suitable to serve the radio cell C and to connect user equipment in the sense of radio devices UE, UE_leg inside the radio cell C to the cellular radio communications network RCN. The first radio device BS is e.g. implemented as a stand-alone equipment.

The second and third radio devices UE, UE_leg reside in the radio cell C and may be referred to as user equipment or machine equipment.

The third radio device UE_leg is a LTE legacy device and fulfils 3GPP TS36.211 V14.00 Sep 2016 The first and second radio devices BS and UE comprise an OFDM-modulator 1000 and/or an OFDM-demodulator 2000, respectively. Many of the embodiments of this description allow operating the third radio device UE_leg in the cell C together with the first and second radio devices BS and UE.

The first radio device BS comprises a memory M1, a processor P1, a radio module R1, and an antenna A1. The second radio device UE comprises a memory M2, the processor P2, a radio module R2, and an antenna A2. The third radio device UE_leg comprises a memory and 3, processor P3, a radio module are 3 and an antenna A1. The processors P1, P2, P3 are implemented using e.g. a DSP, FPGA, or the like or a combination thereof. The memory M1, M2, M3 is implemented using e.g. a RAM, ROM, DDR, Flash memory, or the like, or a combination thereof. The memory M1, M2, M3 stores e.g. computer readable instructions, thus instructions executable by the processor P1, P2, P3. The processor P1 processes data to be transmitted to the first and second radio device UE, UE_leg. The processing includes the steps necessary to fulfil the requirements set by the radio communications network RCN.

At least parts of the above described cellular radio communications network RCN including sender and/or receiver of the first radio device BS could be implemented using network functions virtualization (NFV). NFV is a network architecture that makes use of technologies of computer virtualization. Entire network equipment like sender or receiver or parts thereof or part of their functions can be virtualized using software building blocks that may connect, or interact, to create communication services. A virtualized network function of e.g. a sender or receiver may include at least one virtual machine running different software and processes, on top of standard high-volume servers, switches and storage, or a cloud computing infrastructure, instead of having customized hardware appliances for each network function. As such a sender or receiver function may be implemented in a computer program using a computer program product embodied on a non-transitory computer readable medium for performing operations, wherein the computer program product comprises instructions, that when executed by a processor, perform the operations of the specific base station, eNodeB, network node, MME (Mobility Management Entity) and/or UE function.

The methods described herein relate to digital signal processing and could thus be implemented using a processor like a digital signal processor, or the like. At least some of the functions relate to baseband processing and could thus be implemented using a transceiver, e.g. a baseband transceiver. The radio module is e.g. a radio module, or a remotely located so called RRH (Remote Radio Head). The constellation with a RRH is often used in connection with a so called NFV (Network Functions Virtualization) implementation, where a substantial part of processing is centralized in a server farm with a plurality of processors and a plurality of memory, and the radio specific up-conversion, the antenna and the digital-to-analog converter for data transmission in downlink to the user equipment and the analog-to-digital converter for receiving data from the user equipment in uplink is remotely located. The radio module is also called radio frontend and includes e.g. a digital-to-analog converter, a low-pass filter, a mixer, a local oscillator, a power amplifier and an antenna. The local oscillator generates the radio frequency which is mixed on the processed data. The aforementioned modules/functions could be placed in serial order. Some modules might be not be used or replaced by others dependent on the technology used. For MIMO or massive MIMO some modules need to be duplicated, e.g. a plurality of antennas is used instead of one and corresponding amplifiers, etc. Additional modules might be added for performing und/or supporting specific functions as e.g. beamforming, CoMP (coordinated multipoint), eICIC (enhanced inter-cell interference control), or the like. User equipment (UE) could be implemented as a device with a radio module, e.g. smartphone, tablet, smartwatch, sensor, actuator, equipment inside a vehicle, machine-to-machine equipment, or else. The radio communications network RCN is an OFDM (Orthogonal Frequency Division Multiplex) type network, e.g. UF-OFDM, F-OFDM, ZT-s-OFDM, P-OFDM, FC-OFDM, or another multi-carrier network, e.g. FS-FBMC, QAM-FBMC, etc. E.g. QAM - Quadrature Amplitude Modulation and/or QPSK - Quadrature Phase Shift Keying are used as modulation technique. The radio network RCN allocates resources using a scheduler and a time-frequency-resource grid, a t-f-resource. The t-f-resource includes time slots and associated subcarriers. The subcarriers are e.g. grouped in frequency subbands. A subband is assigned at least one subband parameter. A subband parameter is e.g. subcarrier spacing, other parameters are e.g. symbol duration, time overhead, time overhead type like zero postfix or cyclic prefix, windowing or filtering parameters. Dependent on the assigned or selected parameters the subband is characterized for a specific transmission type and is in particular suitable for the transmission of specific services. A service is e.g. eMBB (enhanced mobile broadband), mMTC (massive machine-type-communication), URLLC (ultra reliable low latency communication), vehicle-to-vehicle communication, voice, video, etc. An allocated physical resource block thus assigns a dedicated time slot associated with one or more subcarriers or a subband to a data packet. A physical resource block assigns one time slot to a subcarrier. A time slot is e.g. called a TTI (transmission time interval). The period of time could e.g. be one or more time slots. Data and control signals are transmitted using physical channels, e.g. physical downlink shared channel, physical downlink control channel, common control physical channel. Further data and control signals could be transmitted using broadcast channel, paging channel, multicast channel.

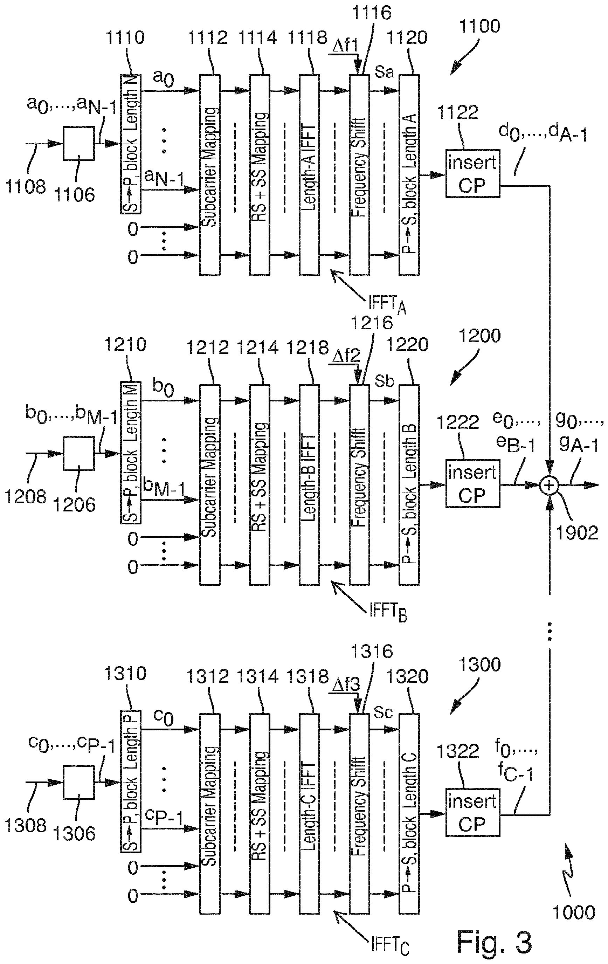

Figure 3 shows a schematic block diagram of the ODFM-modulator 1000 with a plurality of processing chains 1100, 1200, 1300. Of course, further processing chains are possible. The processing chain 1100 is described in detail in the following, wherein the further processing chains are similar to the processing chain 1100 but may differ at least in the used respective block lengths and frequency offsets. A block 1106 determines the first ingress modulation-symbol stream $a_0,...,a_{N-1}$ in dependence on a first ingress data stream 1108. The block 1106 may comprise an QAM-modulator (Quadrature Amplitude Modulation) and/or an QPSK-modulator (Quadrature Phase Shift Keying), a channel pre-coder, and/or further processing entities. A serial to parallel converter 1110 converts the first ingress modulation-symbol stream $a_0,...,a_{N-1}$ from a serial to a parallel symbol stream. The parallelized first ingress modulation-symbol stream $a_0,...,a_{N-1}$ is applied to a subcarrier mapper 1112. A mapper 1114 maps reference symbols and/or synchronisation symbols to the modulation-symbol stream. The modulation-symbol stream determined by the mapper 1114 is applied to an inverse Fast Fourier Transform block 1118 to determine the inverse Fast Fourier Transform $IFFT_A$ in dependence on the the first ingress modulation-symbol stream $a_0,...,a_{N-1}$. A frequency shifter 1116 shifts the applied inverse Fast Fourier Transform $IFFT_A$ by the applied first frequency offset $\Delta f1$ to determine a plurality of first frequence-shifted samples Sa in dependence on the first inverse Fast Fourier Transform $IFFT_A$. The first frequency-shifted samples Sa are serialized by means of a parallel-to-serial converter 1120 and applied to a cyclic prefix (CP) inserter 1122 to determine the first egress sample stream $d_0,...,d_{A-1}$. The cyclic prefix inserter 1122 can be also omitted.

The processing chains 1200, 1300 differ from the processing chain 1100 as described above in the following: The ingress data streams 1208 and 1308 and 1108 are mutually different with respect to their contents. The second and third block lengths B, C of the second and third inverse Fast Fourier Transform $IFFT_B$, $IFFT_C$ multiplied with a respective integer factor K, also termed K-factor, equal the first block length A of the first inverse Fast Fourier Transform IFFT$_A$. The first block length A is also termed the main block length or the main FFT length. The block lengths N, M and P of the serial to parallel converters 1110, 1210 and 1310 are equal or smaller than the respective block length A, B, C of the corresponding inverse Fast Fourier Transform block 1118, 1218, 1318.

Given the largest block length of the fourier transform in the sense of the main block length A, each processing chain has to fulfil the following equation (1) with a FFT block length bl and the corresponding K-factor K. From equation (1) it is apparent that the K-Faktor K always equals to a power of two.

$$bl * K = A \qquad (1)$$

For cellular radio communications network RCN with the main block length A of 2048 also legacy LTE devices can be supported. In this case the subcarrier spacing f0 providing a fixed subcarrier spacing grid for all of the other processing chains is 15 kHz. Of course, the main block length A can be chosen differently, however loosing compatibility with legacy LTE devices. The sample time Ts is the same for all systems and forms together with a basic subcarrier spacing f0 the fixed elementary parameters of all configurations. The K-factor K for each FFT length can then be determined according to equation (2).

$$K = 1 / (FFT\ length * Ts * f0) \qquad (2)$$

For applications with a demand for low energy consumption and short symbol rates, the second radio device UE may only comprise processing chains with a high K-Factor, particularly a K-factor K greater than 1.

The following equations (3) to (6) show that the modulation and demodulation scheme proposed in this description still provides that the subcarriers are orthogonal. Equation (3) provides the Fast Fourier Transform FFT_R of block length R with the parameter k. In equation (4) the right hand term is separated into two components X_I and X_II each representing - as we will see - Fast Fourier Transforms. Equation (5) comprises a parameter transform from parameter k of equation (4) to the parameter 2*u. Equation (6) represents equation (5) in a rewritten form. Equations (5) and (6) provide two Fast Fourier Transforms XI(u) and XII(u) of a block length of R/2 in comparison with the Fast Fourier Transform of block length R in equations (3) and (4). Consequently, subcarrier orthogonality is maintained while FFT block lengths are used that comply with the K-factor scheme described in equation (1).

$$FFT_R(k) = \sum_{n=0}^{R-1} x(n) * e^{-j\frac{2\pi}{R}kn}$$

(3)

$$FFT_R(k) = \underbrace{\sum_{r=0}^{\frac{R}{2}-1} x(r) * e^{-j\frac{2\pi}{R}kr}}_{X_I(k)} + \underbrace{\sum_{r=\frac{R}{2}}^{R-1} x(r) * e^{-j\frac{2\pi}{R}kr}}_{X_{II}(k)}$$

(4)

$$FFT_R(2u) = \underbrace{\sum_{r=0}^{\frac{R}{2}-1} x(r) * e^{-j\frac{2\pi}{R}2ur}}_{X_I(u)} + \underbrace{\sum_{r=\frac{R}{2}}^{R-1} x(r) * e^{-j\frac{2\pi}{R}2ur}}_{X_{II}(u)}$$

(5)

$$FFT_R(2u) = \underbrace{\sum_{r=0}^{\frac{R}{2}-1} x(r) * e^{-j\frac{2\pi}{\frac{R}{2}}ur}}_{X_I(u)} + \underbrace{\sum_{r=\frac{R}{2}}^{R-1} x(r) * e^{-j\frac{2\pi}{\frac{R}{2}}ur}}_{X_{II}(u)}$$

(6)

The following table 1 shows possible configurations for processing chains of the OFDM-modulator 1000 and the OFDM-demodulator 2000.

Table 1

| FFT Length | Num N of PRBs | K-Factor | N * K | Symbol Length in μs | Bandwidth | Integrat ion in LTE 20MHz |
|---|---|---|---|---|---|---|
| 16 | 1 | 128 | 128 | 0,5 | 23,04MHz | No |
| 32 | 1 | 64 | 64 | 1,0 | 11,52MHz | Yes |
| 64 | 1 | 32 | 32 | 2,1 | 5,76MHz | Yes |
|  | 2 |  | 64 |  | 11,52MHz |  |
|  | 3 |  | 96 |  | 17,28MHz |  |
| 128 | 1 | 16 | 16 | 4,2 | 2,88MHz | Yes |
|  | 2 |  | 32 |  | 5,76MHz |  |
|  | 3 |  | 48 |  | 8,64MHz |  |
|  | 4 |  | 64 |  | 11,52MHz |  |
|  | 5 |  | 80 |  | 14,40MHz |  |
|  | 6 |  | 96 |  | 17,28MHz |  |
| 256 | 1 | 8 | 8 | 8,33 | 1,44MHz | Yes |
|  | 2 |  | 16 |  | 2,88MHz |  |
|  | 3 |  | 24 |  | 4,32MHz |  |
|  | 4 |  | 32 |  | 5,76MHz |  |
|  | 5 |  | 40 |  | 7,20MHz |  |
|  | 6 |  | 48 |  | 8,64MHz |  |
|  | 7 |  | 56 |  | 10,08MHz |  |
|  | 8 |  | 64 |  | 11,52MHz |  |
|  | 9 |  | 72 |  | 12,96MHz |  |
|  | 10 |  | 80 |  | 14,40MHz |  |
|  | 11 |  | 88 |  | 15,84MHz |  |
|  | 12 |  | 96 |  | 17,28MHz |  |
| 512 | 1 | 4 | 4 | 16,65 | 0,72MHz | Yes |
|  | 2 |  | 8 |  | 1,44MHz |  |
|  | 3 |  | 12 |  | 2,16MHz |  |
|  | 4 |  | 16 |  | 2,88MHz |  |
|  | 5 |  | 20 |  | 3,60MHz |  |
|  | 6 |  | 24 |  | 4,32MHz |  |
|  | 7 |  | 28 |  | 5,04MHz |  |
|  | 8 |  | 32 |  | 5,76MHz |  |
|  | 9 |  | 36 |  | 6,48MHz |  |
|  | 10 |  | 40 |  | 7,20MHz |  |
|  | 11 |  | 44 |  | 7,92MHz |  |
|  | 12 |  | 48 |  | 8,64MHz |  |
|  | 13 |  | 52 |  | 9,36MHz |  |

(continued)

| FFT Length | Num N of PRBs | K-Factor | N * K | Symbol Length in µs | Bandwidth | Integration in LTE 20MHz |
|---|---|---|---|---|---|---|
| | 14 | | 56 | | 10,08MHz | |
| | 15 | | 60 | | 10,80MHz | |
| | 16 | | 64 | | 11,52MHz | |
| | 17 | | 68 | | 12,24MHz | |
| | 18 | | 72 | | 12,96MHz | |
| | 19 | | 76 | | 13,68MHz | |
| | 20 | | 80 | | 14,40MHz | |
| | 21 | | 84 | | 15,12MHz | |
| | 22 | | 88 | | 15,84MHz | |
| | 23 | | 92 | | 16,56MHz | |
| | 24 | | 96 | | 17,28MHz | |
| | 25 | | 100 | | 18,00MHz | |
| 1024 | 1 | 2 | 2 | 33,3 | 0,36MHz | Yes |
| | 2 | | 4 | | 0,72MHz | |
| | 3 | | 6 | | 1,08MHz | |
| | 4 | | 8 | | 1,44MHz | |
| | 5 | | 10 | | 1,80MHz | |
| | 6 | | 12 | | 2,16MHz | |
| | 7 | | 14 | | 2,52MHz | |
| | 8 | | 16 | | 2,88MHz | |
| | 9 | | 18 | | 3,24MHz | |
| | 10 | | 20 | | 3,60MHz | |
| | 11 | | 22 | | 3,96MHz | |
| | 12 | | 24 | | 4,32MHz | |
| | 13 | | 26 | | 4,68MHz | |
| | 14 | | 28 | | 5,04MHz | |
| | 15 | | 30 | | 5,40MHz | |
| | 16 | | 32 | | 5,76MHz | |
| | 17 | | 34 | | 6,12MHz | |
| | 18 | | 36 | | 6,48MHz | |
| | 19 | | 38 | | 6,84MHz | |
| | 20 | | 40 | | 7,20MHz | |
| | 21 | | 42 | | 7,56MHz | |
| | 22 | | 44 | | 7,92MHz | |
| | 23 | | 46 | | 8,28MHz | |
| | 24 | | 48 | | 8,64MHz | |
| | 25 | | 50 | | 9,00MHz | |
| LTE: 2048 | 1 ... 100 | 1 | 1 ... 100 | 66,6 | 0,18...18MHz | Yes |

An adder 1902 adds the first, second and third egress sample streams $d_0,...,d_{A-1}$, $e_0,...,e_{B-1}$, $f_0,...,f_{C-1}$ to a sum, namely the joined sample stream $g_0,...,g_{A-1}$. The joined sample stream $g_0,...,g_{A-1}$ is applied to the the respective radio module R1, R2 for further processing including e.g. digital-to-analog conversion and subsequently up-converted to a carrier frequency higher than respective subcarrier frequencies. Of course, other implementations of the radio modules R1, R2 are possible.

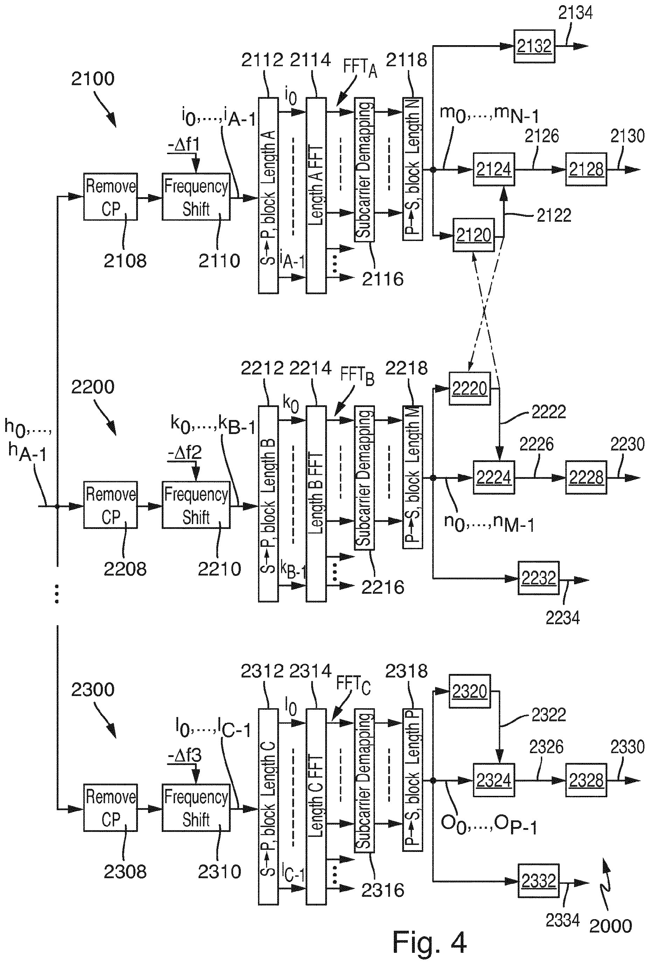

The serial-to parallel-converters and the parallel-to-serial converters in figures 3 and 4 are arranged at an exemplary position. Of course these converters can be arranged at other positions to optimize the respective processing chain.

Figure 4 shows schematic block diagram of an OFDM-demodulator 2000 with a plurality of processing chains 2100, 2200, 2300. Of course, further processing chains are possible. The processing chain 2100 is described in detail in the following, wherein the further processing chains are similar to the processing chain 2100. A cyclic prefix remover 2108 removes a cyclic prefix CP. The cyclic prefix remover 2108 can also be omitted. The frequency shifter 2110 back-shifts the down-converted sample stream $h_0,...,h_{A-1},...$ not comprising the cyclic prefix in dependence on the supplied first frequency offset $\Delta f1$. The frequency shifter 2110 determines the first ingress sample stream $i_0,..., i_{A-1}$, which is parallelized by a serial-to-parallel converter 2112. A forward Fast Fourier Transform block 2114 determines the forward Fast Fourier Transform $FFT_A$ of the first block size A in dependence on the parallelised ingress sample stream $i_0,...,i_{A-1}$. A demapper 2116 demaps the subcarriers. A parallel-to-serial converter 2118 of block length N determines the first egress demodulation-symbol stream $m_0,...,m_{N-1}$ in dependence on the first forward Fast Fourier Transform $FFT_A$. A channel estimator 2120 determines a channel estimate 2122 in dependence on reference symbols contained in the first egress demodulation-symbol stream $m_0,...,m_{N-1}$. An equalizer 2124 determines an equalized egress modulation-symbol stream 2126 in dependence on the first egress demodulation-symbol stream $m_0,...,m_{N-1}$ and in dependence on the channel estimate 2122. As indicated with arrows the channel estimates 2122 and 2222 can be exchanged, wherein for example the estimator 2120 receives the channel estimate 2222. A block 2128 determines an egress data stream 2130 in dependence on the equalized egress demodulation-symbol stream 2126. The channel estimator 2120 and the equalizer 2124 are only examplary and may comprise other taps regarding the respective input and output symbol streams. The block 2128 may comprise an QAM-demodulator (Quadrature Amplitude Modulation) and/or an QPSK-demodulator (Quadrature Phase Shift Keying), a channel de-coder, and/or further processing entities. The egress data stream 2130 equals the ingress data stream 1108. A correlator 2132 detects a synchronization symbol in the first egress demodulation-symbol stream $m_0,...,m_{N-1}$ and determines a synchronisation state 2134.

The processing chains 2200, 2300 differ from the processing chain 2100 as described above in the following: The egress data streams 2130 and 2230 and 2330 are mutually different with respect to their contents. The second and third block lengths B, C of the second and third forward Fast Fourier Transform $FFT_B$, $FFT_C$ multiplied with the K-factor equals the main block length A.

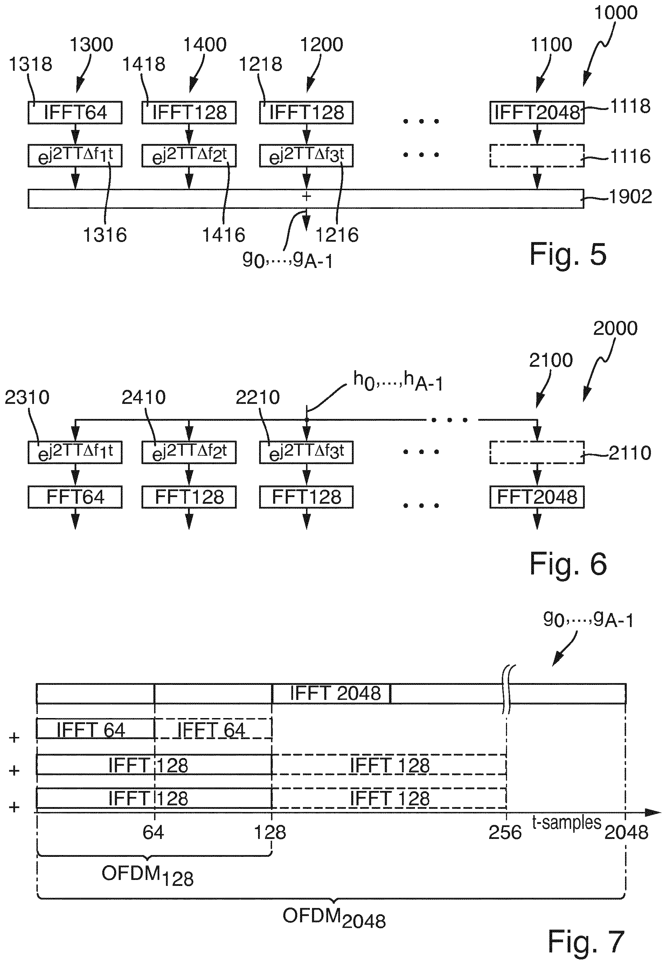

Figure 5 shows a schematic block diagram of the ODFM-modulator 1000. The first processing chain 1100 is operated with the main block length A of 2048. The second and fourth processing chains 1200 and 1400 are operated with the same block length B of 128. The third processing chain 1300 is operated with the block length C of 64. According to the frequency shifter 1116 no frequency shift ($\Delta f1 = 0$ Hz) is applied in the first processing chain 1100. The frequency shifters 1216, 1316 and 1416 apply respective frequency offsets $\Delta f2$, $\Delta f3$ and $\Delta f4$.

Figure 6 shows schematic block diagram of an OFDM-demodulator 2000. According to the frequency shifter 2110 no frequency back-shift is applied on the down-converted sample stream $h_0,...,h_{A-1},...$ in the first processing chain 2100. Frequency shifters 2210, 2310 and 2410 back-shift the down-converted sample stream $h_0,..., h_{A-1},...$ by the respective frequency offsets $\Delta f2$, $\Delta f3$ and $\Delta f4$ to determine the respective ingress sample streams.

Figure 7 shows a schematic representation of the joined modulation-symbol stream $g_0,...,g_{A-1}$ of figure 5. As exemplified different OFDM symbol lengths of OFDM_2048 and OFDM_128 can be realized by means of the proposed OFDM-modulator 1000 and the OFDM-demodulator 2000. After the OFDM-symbol with length OFDM_2048 the numerology in the sense of frequency offsets and block length on the respective subcarrier or subcarrier block may change. Therefore, numerology changes from one (largest) OFDM-symbol to another is possible.

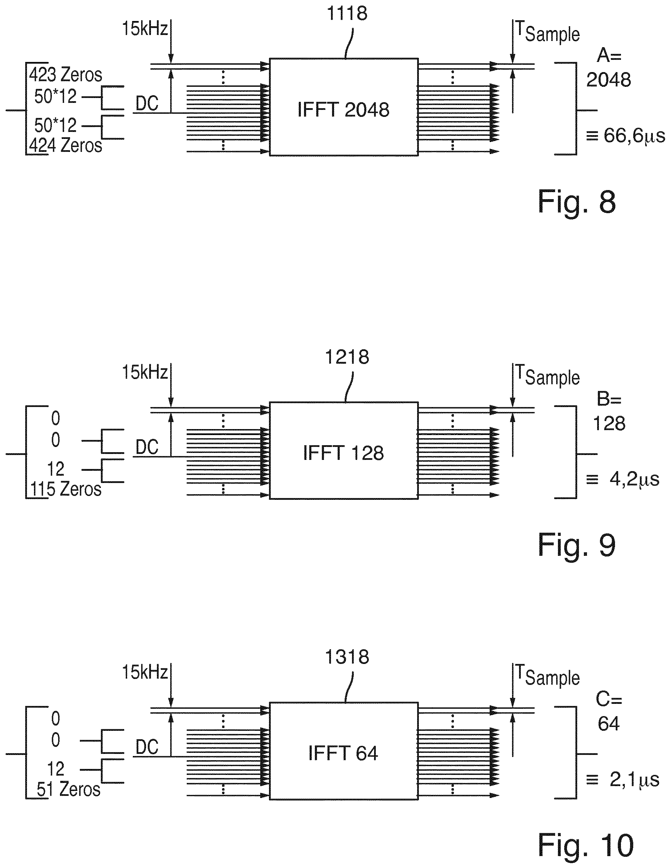

Figure 8 shows schematically the inverse Fast Fourier Transform block 1118 with the main block length A of 2048 to generate an LTE compatbile OFDM-symbol with length of 66,6 $\mu$s (omitting cyclic prefix). The main block length A of 2048 also determines the subcarrier spacing for all systems/processing chains with a K-Factor greater than one. Therefore the main block length A of the first processing chain 1100/2100 determines a subcarrier spacing grid with the fixed subcarrier spacing for the other processing chains.

Figure 9 shows schematically the inverse Fast Fourier Transform block 1218 with the block length B of 128 to generate an OFDM-symbol length of 4,2 $\mu$s (omitting cyclic prefix). The K-Factor corresponding to the block 1218 is 16.

Figure 10 shows schematically the inverse Fast Fourier Transform block 1318 with the block length C of 64 to generate an OFDM-symbol length of 2, 1 $\mu$s (omitting cyclic prefix). The K-Factor corresponding to the block 1318 is 32.

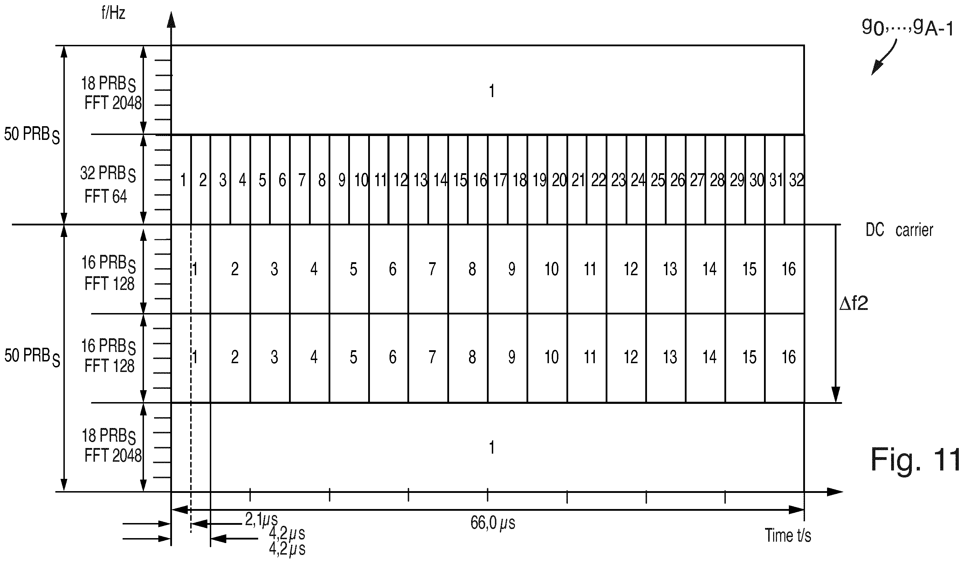

Figure 11 shows a schematic time frequency representation of the joined modulation-symbol stream $g_0,...,g_{A-1}$. As an example it is shown the frequency offset $\Delta f2$ which is applied to the frequency shifter 1216. The DC carrier is the reference for all frequency offsets $\Delta f$ and has an exemplary value of Zero Hz. To determine the frequency offset $\Delta f2$ the number of physical resource blocks RBs, namely 32, is multiplied with the number of subcarriers per resource block RB, namely 12, with an additional subcarrier SC of one. The result is multiplied with the subcarrier spacing SCS, namely 15 kHz. Therefore the frequency offset $\Delta f2$ is calculated according to the following equation (7).

$$\Delta f2 = (RB*SC+1)* SCS \text{ kHz} = 5,775 \text{ MHz} \qquad (7)$$

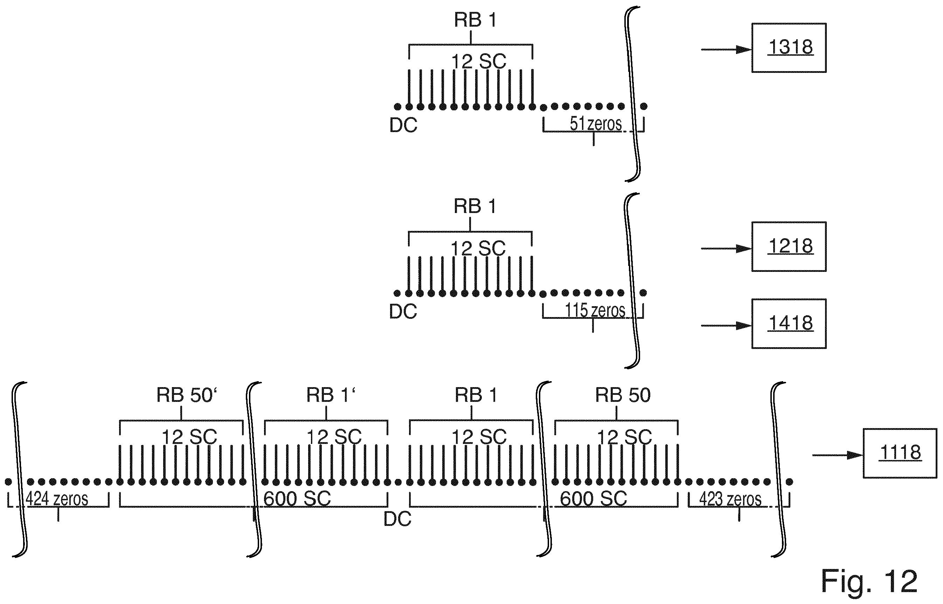

Figure 12 shows a schematic representation of IFFT processing formats. Exemplary input modulation-symbols of the inverse Fast Fourier Transform blocks 1118, 1218 and 1318 of figure 5 are shown.

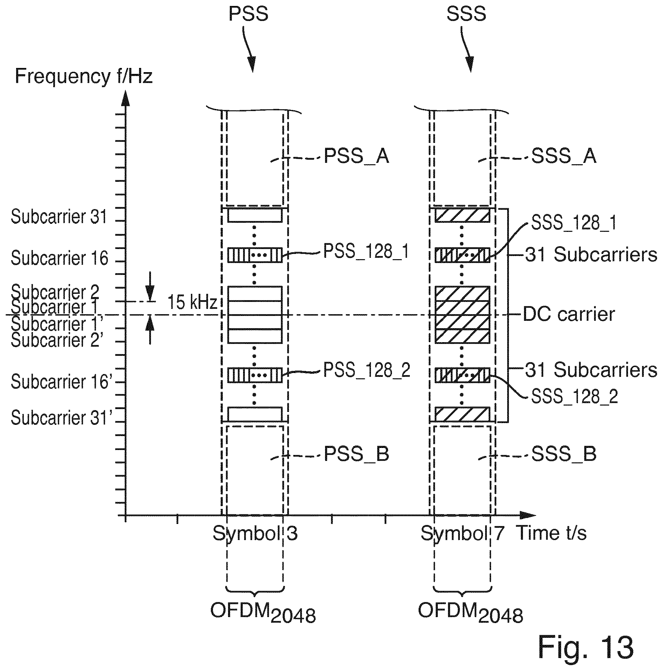

Figure 13 shows a schematic time-frequency representation of a primary synchronisation signal PSS and a secondary synchronisation signal SSS. The synchronisation signals PSS, SSS can be determined according to 3GPP 36.211 section 6.11 and are mapped to 62 subcarriers around the DC carrier to the third and seventh of the (largest) OFDM-symbol of the main processing chain 1100 with main block size A, respectively.

According to the mappers 1114, 1214, 1314 it is determined an inverse Fast Fourier Transform IFFT of a synchronization sequence SS with the first block size A. The inverse Fast Fourier Transform IFFT of the synchronization sequence SS is repeated across the available bandwidth according to frequency ranges PSS_A and PSS_B, SSS_A and SSS_B, respectively.

According to the demappers 2116, 2216, 2316 it is determined at least a component PSS_128_1, PSS_128_2, SSS_128_1, SSS_128_2 of the synchronization signal PSS, SSS, which has been modulated with the first block length A, in dependence on the second egress demodulation-symbol stream $n_0,...,n_{M-1}$. The shown components PSS_128_1, PSS_128_2, SSS_128_1, SSS_128_2 can be seen at the side of the OFDM-demodulator 2000 in the second egress demodulation-symbol stream with the second processing chain 2200 operating with the block length B of 128. Therefore the proposed mapping scheme makes available synchronisation information for every processing chain on the side of the OFDM-demodulator 2000. For processing chains with the K-Factor larger than one the synchronisation symbol is split in symbols of reduced length.

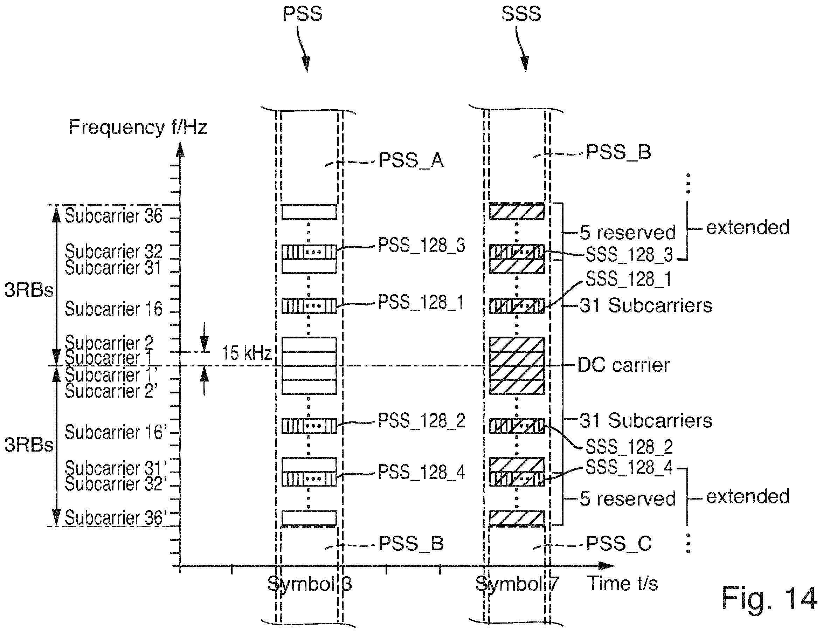

Figure 14 shows a schematic time-frequency representation of synchronisation signals PSS, SSS. With difference to figure 13 the synchronisation signals PSS, SSS are mapped to 72 subcarriers around the DC carrier to the first and seventh OFDM-symbol of the main processing chain 1100 with main block size A, respectively. This augments the visibility on the side of the OFDM-demodulator of the synchronisation signals PSS, SSS around the DC carrier, exemplary shown for subcarriers with reference signs PSS_128_3, PSS_128_4, SSS_128_3, SSS_128_4 for the block length B of 128.

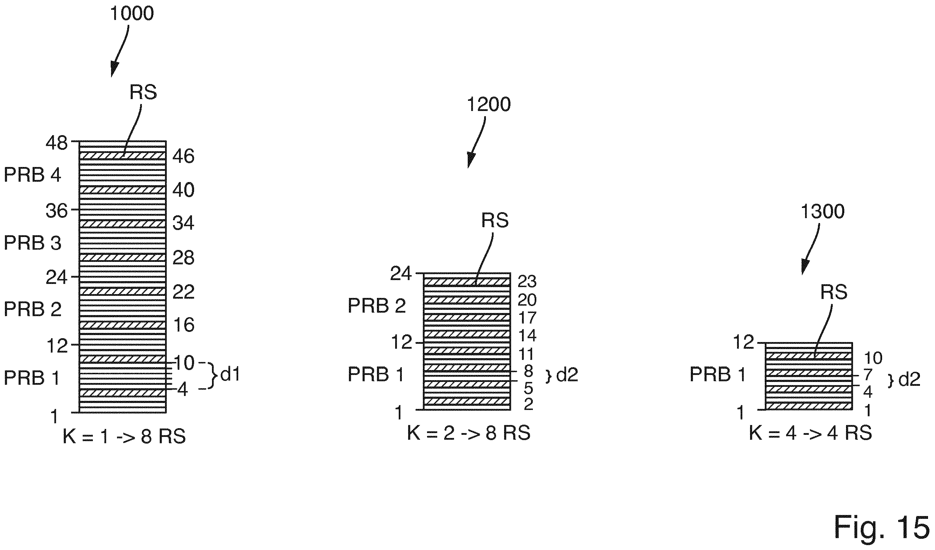

Figure 15 shows an exemplary reference symbol allocation scheme for operating the mappers 1112, 1212, 1312 and the demappers 2116, 2216, 2316. The OFDM-modulator 1000 and the OFDM-demodulator 2000 operate with a physical resource block length of 12 subcarriers. A first plurality of reference symbols RS are inserted into the first ingress modulation-symbol stream $a_0,...,a_{N-1}$ with a spacing d1 between neighboring reference symbols RS of five subcarriers. In the second processing chain 1200 and the third processing chain 1300 a second plurality of reference symbols RS is inserted into the second ingress modulation-symbol stream $b_0,...,b_{M-1}$ with a spacing d2 between neighboring reference symbols RS of two subcarriers.

On the side of the OFDM-demodulator 2000 the processing chain 2100 is configured to determine a first plurality of reference symbols RS from the first egress demodulation-symbol stream $m_0,...,m_{N-1}$ with the spacing d1 between neighboring reference symbols RS of five subcarriers. The processing chain 2200 on the other hand is configured to determine a second plurality of reference symbols RS from the second egress demodulation-symbol stream $n_0,...,n_{M-1}$ with the spacing d2 between neighboring reference symbols RS of two subcarriers.

Therefore, the reference symbols system of 3GPP 36.211 can be used for the first processing chain 1100, wherein reference symbols are positioned as a function of frequency, time, antenna port and cell ID. The proposed scheme comprises a shift by 3 subcarriers between the positions 0 and 4 in the respective subcarriers. Between adjacent cells the reference symbols are shifted. According to the example in figure 15 the reference symbols are shifted by one position in comparison with the proposed scheme in 3GPP 36.211.

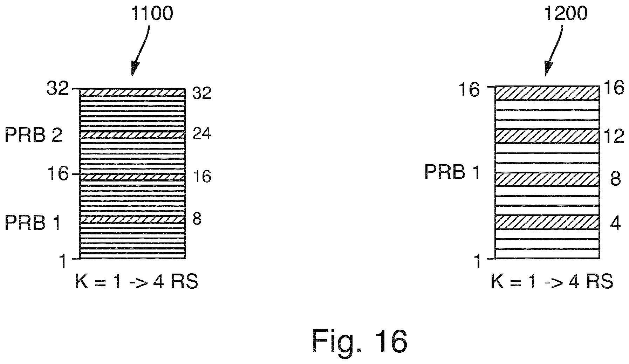

Figure 16 shows an exemplary reference symbol allocation scheme. The OFDM-modulator 1000 and the OFDM-demodulator 2000 operate with a physical resource block length of $2^X$ subcarriers, in the example a physical resource block PRB comprises 16 subcarriers. On the side of the OFDM-modulator 1000 the processing chain 1100 is configured to insert a first plurality of reference symbols RS into the first ingress modulation-symbol stream $a_0,...,a_{N-1}$ at each $2^Z$ subcarrier position. The second processing chain 1200 with a K-Factor of 2 is configured to insert a second plurality of reference symbols RS into the second ingress modulation-symbol stream $b_0,...,b_{M-1}$ at each $2^Z$ subcarrier positions and at further positions between the $2^Z$ subcarrier positions, namely positions 4 and 12.

The first processing chain 2100 of the OFDM-demodulator 2000 is configured to determine a first plurality of reference symbols RS from the first egress demodulation-symbol stream $m_0,...,m_{N-1}$ at each $2^Z$ subcarrier position. The second processing chain 2200 with a K-Factor of 2 is configured to determine a second plurality of reference symbols RS from the second egress demodulation-symbol stream $n_0,...,n_{M-1}$ at each $2^Z$ subcarrier positions and at further positions between the $2^Z$ subcarrier positions, namely positions 4 and 12.

Therefore the amount of reference symbols per physical resource block is increased with increasing K-Factor. Therefore, smaller FFT block lengths are provided with more reference symbols allowing a better channel estimation and therefore compensates for a loss in performance of channel estimation.

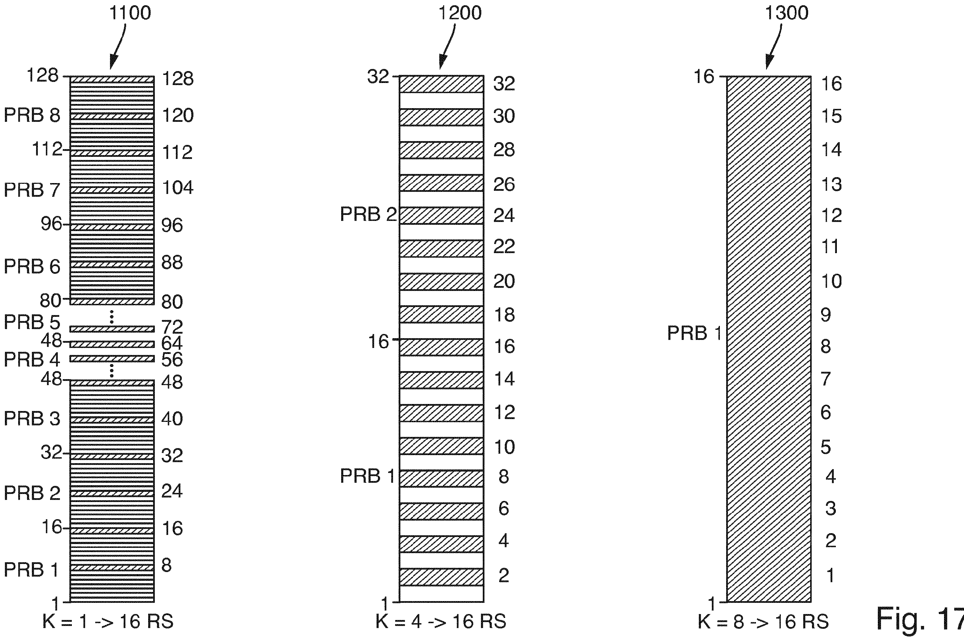

Figure 17 shows an exemplary reference symbol allocation scheme. With difference to figure 16 a number of 16 reference symbols RS is distributed in frequency direction. However, the same distribution scheme along the different K-Factor systems and the respective processing chains applies, particularly providing at each $2^Z$ subcarrier position across the respective bandwidth a reference symbol and increase the reference symbol density with rising K-Factor by filling the gaps between neighbouring $2^Z$ subcarrier positions with further reference symbols RS.

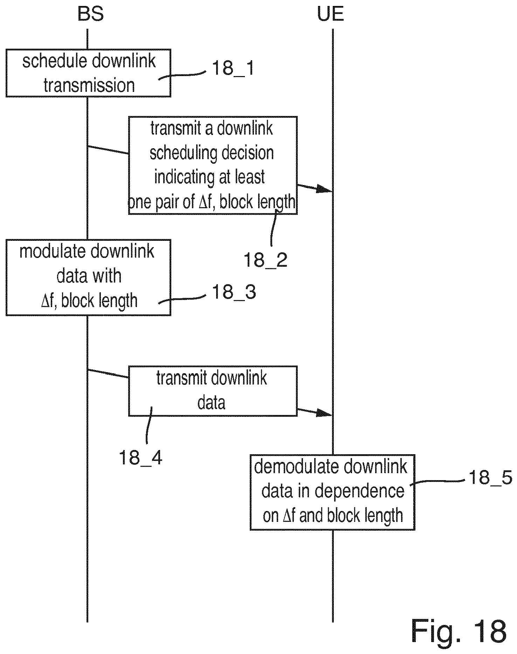

Figure 18 shows schematically a downlink transmission scheduling scheme. In a step 18_1 a downlink transmission is scheduled by the first radio device BS. A downlink transmission is scheduled by transmitting in a step 18_2 a downlink scheduling decision comprising at least an indication of the frequency offset $\Delta f$ and an indication of the block length for the respective fourier transform. In a step 18_3 downlink data is modulated with the scheduled frequency offset and block length. In a step 18_4 the modulated downlink data is transmitted to the second radio device UE. The second radio device UE can then receive and demodulate the downlink data in a step 18_5 by back shifting the respective samples with the scheduled frequency offset $\Delta f$ and determining a forward Fourier transform FFT with the scheduled block length.

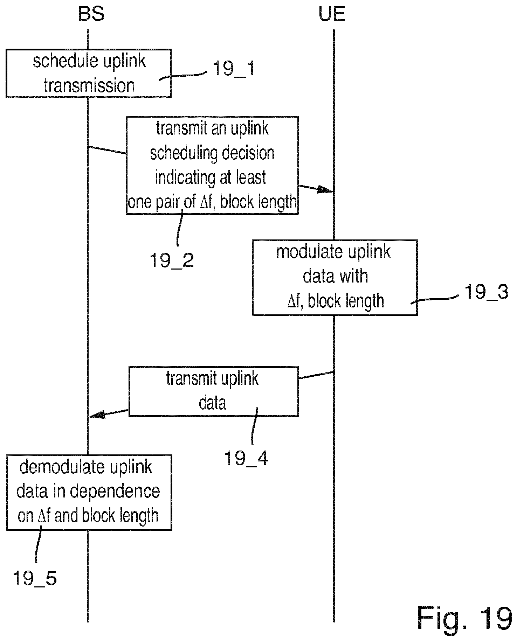

Figure 19 shows schematically an uplink transmission scheduling scheme. The first radio device BS schedules an uplink transmission in a step 19_1. A scheduling decision indicating at least a pair of the frequency offset $\Delta f$ and the block length for uplink data is transmitted to the second radio device UE in a step 19_2. The second radio device UE modulates in a step 19_3 the uplink data in dependence on the uplink scheduling decision. In a step 19_4 the modulated uplink data is transmitted to the first radio device BS. In a step 19_5 the uplink data is demodulated in dependence on the scheduled uplink transmission.

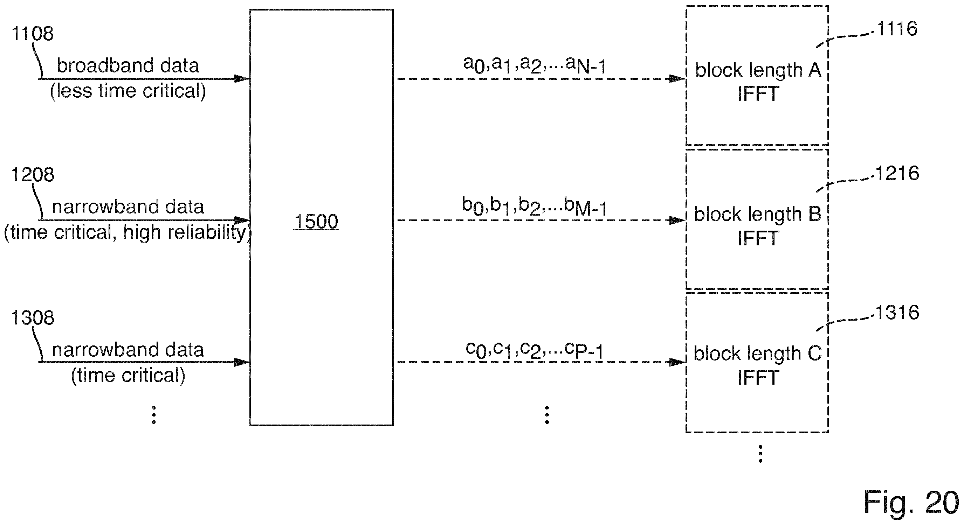

Figure 20 shows a schematic block diagram for operating a multi-service device for transmission. A subband used is assigned to a K-factor. Further subband parameters comprise e.g. subcarrier spacing, other parameters are e.g. symbol duration, time overhead, time overhead type like zero postfix or cyclic prefix, windowing or filtering parameters. Dependent on the assigned or selected K-factor K the subband is characterized for a specific transmission type and is in particular suitable for the transmission of specific services. A service 1108 is e.g. eMBB (enhanced mobile broadband). A service 1208 is e.g. mMTC (massive machine-type-communication). A service 1308 is URLLC (ultra reliable low latency communication. Futher services comprise vehicle-to-vehicle communication, voice, video, etc. An allocated resource block thus assigns a dedicated time slot associated with one or more subcarriers or a subband with the respective K-factor K to a data packet of the corresponding service. A block 1500 distributes the data of the services 1108 to 1308 to the respective ingress symbol streams.

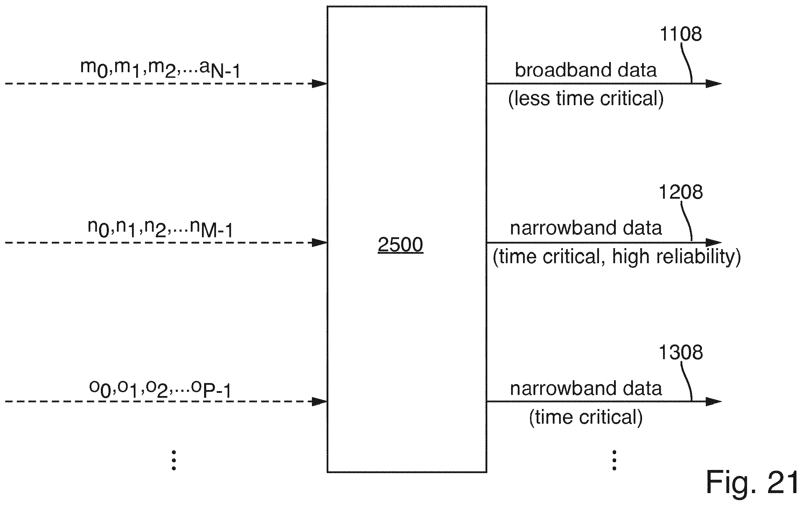

Figure 21 shows a schematic block diagram for operating the multi-service device for reception. Data of the services 1108 to 1308 is reconstructed by means of a block 2500 which receives the egress demodulation-symbol streams $m_0,...,m_{N-1}$, $n_0,...,n_{M-1}$, $o_0,...,o_{P-1}$.

The functions of the various elements shown in the FIGs., including any functional blocks labelled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

**Claims**

1. An OFDM-modulator (1000) for operating in a radio device (BS; UE) of a cellular radio communications network (RCN), wherein the OFDM-modulator (1000) comprises a processor (P1; P2) and a memory (M1; M2) being configured to:

    - receive a first and second ingress modulation-symbol stream ($a_0,...,a_{N-1}$, $b_0,...,b_{M-1}$);
    - determine a first and second inverse Fast Fourier Transform ($IFFT_A$, $IFFT_B$) of different block lengths (A, B) in dependence on the first and second ingress modulation-symbol stream ($a_0,...,a_{N-1}$, $b_0,...,b_{M-1}$), respectively, wherein the second block length (B) of the second inverse Fast Fourier Transform ($IFFT_B$) multiplied with an integer factor (K) equals the first block length (A) of the first inverse Fast Fourier Transform ($IFFT_A$);

- determine first and second frequency-shifted samples (Sa; Sb) of different frequency offsets to a subcarrier frequency (DC) in dependence on the first and second inverse Fast Fourier Transform ($IFFT_A$, $IFFT_B$), respectively;

- determine a first and second egress sample stream ($d_0,...,d_{A-1}$, $e_0,...,e_{B-1}$) in dependence on the first and second frequency-shifted samples (Sa; Sb), respectively;

- determine a joined sample stream ($g_0,...,g_{A-1}$) in dependence on the first and second frequency-shifted sample streams ($d_0,...,d_{A-1}$, $e_0,...,e_{B-1}$) for up-converting the joined sample stream ($g_0,...,g_{A-1}$) to a carrier frequency higher than respective subcarrier frequencies;

- determine an inverse Fast Fourier Transform of a synchronization sequence (SS) with the first block length (A); and

- repeat the synchronization sequence (SS) across the available bandwidth as a synchronization signal (PSS; SSS) for different block lengths and different frequency offsets such that for the second inverse Fast Fourier Transform ($IFFT_B$) of the second block length with the integer factor (K) being larger than one a synchronization symbol is split in symbols of reduced length.

2. The OFDM-modulator (1000) according to claim 1,

- wherein the first block length (A) equals 2048.

3. The OFDM-modulator (1000) according to claims 1 or 2, the processor (P1; P2) and memory (M1; M2) being further configured to:

- operate with a physical resource block length of $2^X$ subcarriers;
- insert a first plurality of reference symbols (RS) into the first ingress modulation-symbol stream ($a_0,...,a_{N-1},$) at each $2^Z$ subcarrier position;
- insert a second plurality of reference symbols (RS) into the second ingress modulation-symbol stream ($b_0,...,b_{M-1}$) at each $2^Z$ subcarrier positions and at further positions derived via a single shift operation of the $2^Z$ grid positions.

4. The OFDM-modulator (1000) according to claim 1 or 2, wherein the processor (P1; P2) and memory (M1; M2) are further configured to:

- operate with a physical resource block length of 12 subcarriers;
- insert a first plurality of reference symbols (RS) into the first ingress modulation-symbol of a slot at each sixth subcarrier;
- insert a second plurality of reference symbols (RS) into the fifth ingress modulation-symbol of a slot at each third subcarrier.

5. An OFDM-demodulator (2000) for operating in a device (BS; UE) of a cellular radio communications network (RCN), wherein the OFDM-demodulator (2000) comprises a processor (P1; P2) and a memory (M1; M2) being configured to:

- receive a down-converted sample stream ($h_0,...,h_{A-1},...$);
- determine a first and second ingress sample stream ($i_0,...,i_{A-1}$, $k_0,...,k_{B-1}$) of the down-converted sample stream ($h_0,...,h_{A-1},...$) of different block lengths (A, B) and of different frequency offsets ($-\Delta f1$, $-\Delta f2$) to a subcarrier frequency (DC), respectively, wherein the second block length (B) of the second forward Fast Fourier Transform ($FFT_B$) multiplied with an integer factor (K) equals the first block length (A) of the first forward Fast Fourier Transform ($FFT_A$);
- determine a first and second forward Fast Fourier Transform ($FFT_A$, $FFT_B$) of the different block lengths (A, B) in dependence on the first and second ingress sample stream ($i_0,...,i_{A-1}$, $k_0,...,k_{B-1}$);
- determine a first and second egress demodulation-symbol stream ($m_0,...,m_{N-1}$, $n_0,...,n_{M-1}$ in dependence on the first and second forward Fast Fourier Transform ($FFT_A$, $FFT_B$) , respectively; and
- determine at least a component of a synchronization signal (PSS; SSS) in dependence on the second egress demodulation-symbol stream ($n_0,...,n_{M-1}$), wherein the synchronization signal (PSS; SSS) comprises a repetition of a synchronization sequence (SS) across the available bandwidth for different block lengths and different frequency offsets such that for the second Fast Fourier Transform ($FFT_B$) of the second block length with the integer factor (K) being larger than one a synchronization symbol is split in symbols of reduced length.

**6.** The OFDM-demodulator (2000) according to claim 5,

- wherein the first block length (A) equals 2048.

**7.** The OFDM-demodulator (2000) according to claim 5 or 6, the processor (P1; P2) and memory (M1; M2) being further configured to:

- operate with a physical resource block length of $2^X$ subcarriers;
- determine a first plurality of reference symbols (RS) from egress demodulation-symbols of a slot at each $2^Z$ subcarrier position;
- determine a second plurality of reference symbols (RS) from egress demodulation-symbols at each $2^Z$ subcarrier positions and at further positions between the $2^Z$ subcarrier positions derived via a single shift operation oft he $2^Z$ grid positions.

**8.** The OFDM-demodulator (2000) according to claim 5 or 6, the processor (P1; P2) and memory (M1; M2) being further configured to:

- operate with a physical resource block length of 12 subcarriers;
- determine a first plurality of reference symbols (RS) from the first egress demodulation-symbol of a slot at each sixth subcarrier;
- determine a second plurality of reference symbols (RS) from the fifth egress demodulation-symbol of a slot at each third subcarrier.

**9.** A radio device (BS; UE) for operating in a cellular radio communications network (RCN), wherein the radio device (BS; UE) comprises:

- the OFDM-modulator (1000) according to one of the claims 1 to 4, wherein the radio device (BS; UE) comprises a radio module (R1; R2) and an antenna (A1; A2) being configured to:
- up-convert the joined sample stream ($g_0$,...,$g_{A-1}$) to the carrier frequency higher than respective subcarrier frequencies;
- transmit the joined sample stream ($g_0$,...,$g_{A-1}$) on a first radio channel (ch1; ch2); and/or wherein the radio device (BS; UE) comprises the OFDM-demodulator (2000) according to one of the claims 5 to 8, wherein the radio device (BS; UE) comprises the radio module (R1; R2) and the antenna (A1; A2) being configured to:
- receive a radio signal from a second channel (ch2; ch1);
- down-convert the radio signal to the ingress sample stream ($h_0$,...,$h_{A-1}$,...) .

**10.** A method to operate a OFDM-modulator (1000) for operating in a radio device (BS; UE) of a cellular radio communications network (RCN), wherein the method comprises:

- receiving a first and second ingress modulation-symbol stream ($a_0$,...,$a_{N-1}$, $b_0$,...,$b_{M-1}$);
- determining a first and second inverse Fast Fourier Transform ($IFFT_A$, $IFFT_B$) of different lengths (A, B) in dependence on the first and second ingress modulation-symbol stream ($a_0$,...,$a_{N-1}$, $b_0$,...,$b_{M-1}$), respectively, wherein the second block length (B) of the second inverse Fast Fourier Transform ($IFFT_B$) multiplied with an integer factor (K) equals the first block length (A) of the first inverse Fast Fourier Transform ($IFFT_A$);
- determine first and second frequency-shifted samples (Sa; Sb) of different frequency offsets to a subcarrier frequency (DC) in dependence on the first and second inverse Fast Fourier Transform ($IFFT_A$, $IFFT_B$), respectively;
- determining a first and second egress sample stream ($d_0$,...,$d_{A-1}$, $e_0$,...,$e_{B-1}$) in dependence on the first and second frequency-shifted samples (Sa; Sb), respectively;
- determining a joined sample stream ($g_0$,...,$g_{A-1}$) in dependence on the first and second egress sample stream ($d_0$,...,$d_{A-1}$, $e_0$,...,$e_{B-1}$) for up-converting the joined sample stream ($g_0$,...,$g_{A-1}$) to a carrier frequency higher than respective subcarrier frequencies;
- determine an inverse Fast Fourier Transform of a synchronization sequence (SS) with the first block size (A); and
- repeat the synchronization sequence (SS) across the available bandwidth as a synchronization signal (PSS; SSS) for different block lengths and different frequency offsets such that for the second inverse Fast Fourier Transform ($IFFT_B$) of the second block length with the integer factor (K) being larger than one a synchronization symbol is split in symbols of reduced length.

**11.** A method to operate a OFDM-demodulator (2000) for operating in a device (BS; UE) of a cellular radio communications network (RCN), wherein the method comprises:

- receiving a down-converted sample stream ($h_0,...,h_A$-$1,...$);
- determining a first and second ingress sample stream ($i_0,...,i_{A-1}$, $k_0,...,k_{B-1}$) of the down-converted sample stream ($h_0,...,h_{A-1},...$) of different block length (A, B) and of different frequency offset ($-\Delta f1$, $-\Delta f2$) to a subcarrier frequency (DC), respectively, , wherein the second block length (B) of the second forward Fast Fourier Transform ($FFT_B$) multiplied with an integer factor (K) equals the first block length (A) of the first forward Fast Fourier Transform ($FFT_A$);
- determining a first and second forward Fast Fourier Transform ($FFT_A$, $FFT_B$) of the different block length (A, B) in dependence on the first and second ingress sample stream ($i_0,...,i_{A-1}$, $k_0,...,k_{B-1}$);
- determine a first and second egress demodulation-symbol stream ($m_0,...,m_{N-1}$, $n_0,...,n_{M-1}$) in dependence on the first and second forward Fast Fourier Transform ($FFT_A$, $FFT_B$) , respectively;
- determine at least a component of a synchronization signal (PSS; SSS) in dependence on the second egress demodulation-symbol stream ($n_0,...,n_{M-1}$), wherein the synchronization signal (PSS; SSS) comprises a repetition of a synchronization sequence (SS) across the available bandwidth for different block lengths and different frequency offsets such that for the second Fast Fourier Transform ($FFT_B$) of the second block length with the integer factor (K) being larger than one a synchronization symbol is split in symbols of reduced length.

**Patentansprüche**

**1.** OFDM-Modulator (1000) zum Betreiben in einer Funkvorrichtung (BS; UE) eines zellularen Funkkommunikationsnetzwerks (RCN), wobei der OFDM-Modulator (1000) einen Prozessor (P1; P2) und einen Speicher (M1; M2) umfasst, die zu Folgendem ausgelegt sind:

- Empfangen eines ersten und eines zweiten Eingangsmodulationssymbolstroms ($a_o, ..., a_{N-1}$, $b_o, ..., b_{M-1}$);
- Bestimmen einer ersten und einer zweiten inversen schnellen Fouriertransformation ($IFFT_A$, $IFFT_B$) von verschiedenen Blocklängen (A, B) in Abhängigkeit vom ersten bzw. vom zweiten Eingangsmodulationssymbolstrom ($a_o, ..., a_{N-1}$, $b_o, ..., b_{M-1}$), wobei die zweite Blocklänge (B) der zweiten inversen schnellen Fouriertransformation ($IFFT_B$) multipliziert mit einem ganzzahligen Faktor (K) gleich der ersten Blocklänge (A) der ersten inversen schnellen Fouriertransformation ($IFFT_A$) ist;
- Bestimmen von ersten und zweiten frequenzverschobenen Abtastwerten (Sa; Sb) von verschiedenen Frequenzversätzen zu einer Unterträgerfrequenz (DC) in Abhängigkeit von der ersten bzw. der zweiten inversen schnellen Fouriertransformation ($IFFT_A$, $IFFT_B$);
- Bestimmen eines ersten und eines zweiten Ausgangsabtaststroms ($d_o, ..., d_{A-1}$, $e_o, ..., e_{B-1}$) in Abhängigkeit vom ersten bzw. vom zweiten frequenzverschobenen Abtastwert (Sa; Sb);
- Bestimmen eines verbundenen Abtaststroms ($g_o, ..., g_{A-1}$) in Abhängigkeit vom ersten und vom zweiten frequenzverschobenen Abtaststrom ($d_o, ..., d_{A-1}$, $e_o, ..., e_{B-1}$) zum Aufwärtswandeln des verbundenen Abtaststroms ($g_o, ..., g_{A-1}$) auf eine Trägerfrequenz höher als jeweilige Unterträgerfrequenzen;
- Bestimmen einer inversen schnellen Fouriertransformation einer Synchronisationssequenz (SS) mit der ersten Blocklänge (A) und
- Wiederholen der Synchronisationssequenz (SS) über die verfügbare Bandbreite als ein Synchronisationssignal (PSS; SSS) für verschiedene Blocklängen und verschiedene Frequenzversätze, derart, dass das Synchronisationssymbol für die zweite inverse schnelle Fouriertransformation ($IFFT_B$) der zweiten Blocklänge, wenn der ganzzahlige Faktor (K) größer ist als eins, in Symbole von reduzierter Länge geteilt wird.

**2.** OFDM-Modulator (1000) nach Anspruch 1,

- wobei die erste Blocklänge (A) gleich 2048 ist.

**3.** OFDM-Modulator (1000) nach Anspruch 1 oder 2, wobei der Prozessor (P1; P2) und der Speicher (M1; M2) ferner zu Folgendem ausgelegt sind:

- Betreiben mit einer physischen Ressourcenblocklänge von $2^X$ Unterträgern;
- Einsetzen einer ersten Vielzahl von Referenzsymbolen (RS) in den ersten Eingangsmodulationssymbolstrom ($a_o, ..., a_{N-1}$) an jeder $2^Z$ Unterträgerposition;
- Einsetzen einer zweiten Vielzahl von Referenzsymbolen (RS) in den zweiten Eingangsmodulationssymbolstrom (bo, ..., $b_{M-1}$) an jeder 2^Z Unterträgerposition und an weiteren Positionen, die via eine einzelne Verschiebungsoperation der 2^Z Gitterpositionen abgeleitet werden.

4. OFDM-Modulator (1000) nach Anspruch 1 oder 2, wobei der Prozessor (P1; P2) und der Speicher (M1; M2) ferner zu Folgendem ausgelegt sind:

   - Betreiben mit einer physischen Ressourcenblocklänge von 12 Unterträgern;
   - Einsetzen einer ersten Vielzahl von Referenzsymbolen (RS) in das erste Eingangsmodulationssymbol eines Schlitzes an jedem sechsten Unterträger;
   - Einsetzen einer zweiten Vielzahl von Referenzsymbolen (RS) in das fünfte Eingangsmodulationssymbol eines Schlitzes an jedem dritten Unterträger.

5. OFDM-Demodulator (2000) zum Betreiben in einer Vorrichtung (BS; UE) eines zellularen Funkkommunikationsnetzwerks (RCN), wobei der OFDM-Demodulator (2000) einen Prozessor (P1; P2) und einen Speicher (M1; M2) umfasst, die zu Folgendem ausgelegt sind:

   - Empfangen eines abwärtsgewandelten Abtaststroms (ho, ..., $h_{A-1}$, ...);
   - Bestimmen eines ersten bzw. eines zweiten Eingangsabtaststroms (io, ..., $i_{A-1}$, ko, ..., $k_{B-1}$) des abwärtsgewandelten Abtaststroms (ho, ..., $h_{A-1}$, ...) von verschiedenen Blocklängen (A, B) und von verschiedenen Frequenzversätzen ($-\Delta f1$, $-\Delta f2$) zu einer Unterträgerfrequenz (DC), wobei die zweite Blocklänge (B) der zweiten vorwärtigen schnellen Fouriertransformation ($FFT_B$) multipliziert mit einem ganzzahligen Faktor (K) gleich der ersten Blocklänge (A) der ersten vorwärtigen schnellen Fouriertransformation ($FFT_A$) ist;
   - Bestimmen einer ersten und einer zweiten vorwärtigen schnellen Fouriertransformation ($FFT_A$, $FFT_B$) der verschiedenen Blocklängen (A, B) in Abhängigkeit vom ersten und vom zweiten Eingangsabtaststrom (io, ..., $i_{A-1}$, ko, ..., $k_{B-1}$);
   - Bestimmen eines ersten bzw. eines zweiten Ausgangsdemodulationssymbolstroms (mo, ..., $m_{N-1}$, no, ..., $n_{M-1}$) in Abhängigkeit von der ersten bzw. der zweiten vorwärtigen schnellen Fouriertransformation ($FFT_A$, $FFT_B$) und
   - Bestimmen von mindestens einer Komponente eines Synchronisationssignals (PSS; SSS) in Abhängigkeit vom zweiten Ausgangsdemodulationssymbolstrom (no, ..., $n_{M-1}$), wobei das Synchronisationssignal (PSS; SSS) eine Wiederholung einer Synchronisationssequenz (SS) über die verfügbare Bandbreite für verschiedene Blocklängen und verschiedene Frequenzversätze umfasst, derart, dass ein Synchronisationssymbol für die zweite schnelle Fouriertransformation ($FFT_B$) der zweiten Blocklänge, wenn der ganzzahlige Faktor (K) größer ist als eins, in Symbole von reduzierter Länge geteilt wird.

6. OFDM-Demodulator (2000) nach Anspruch 5,

   - wobei die erste Blocklänge (A) gleich 2048 ist.

7. OFDM-Demodulator (2000) nach Anspruch 5 oder 6, wobei der Prozessor (P1; P2) und der Speicher (M1; M2) ferner zu Folgendem ausgelegt sind:

   - Betreiben mit einer physischen Ressourcenblocklänge von 2^X Unterträgern;
   - Bestimmen einer ersten Vielzahl von Referenzsymbolen (RS) anhand von Ausgangsdemodulationssymbolen eines Schlitzes an jeder 2^Z Unterträgerposition;
   - Bestimmen einer zweiten Vielzahl von Referenzsymbolen (RS) anhand von Ausgangsdemodulationssymbolen an jeder 2^Z Unterträgerpositionen und an weiteren Positionen zwischen den 2^Z Unterträgerpositionen, die via eine einzelne Verschiebungsoperation der 2^Z Gitterpositionen abgeleitet werden.

8. OFDM-Demodulator (2000) nach Anspruch 5 oder 6, wobei der Prozessor (P1; P2) und der Speicher (M1; M2) ferner zu Folgendem ausgelegt sind:

   - Betreiben mit einer physischen Ressourcenblocklänge von 12 Unterträgern;
   - Bestimmen einer ersten Vielzahl von Referenzsymbolen (RS) anhand des ersten Ausgangsdemodulationssymbols eines Schlitzes an jedem sechsten Unterträger;
   - Bestimmen einer zweiten Vielzahl von Referenzsymbolen (RS) anhand des fünften Ausgangsdemodulationssymbols eines Schlitzes an jedem dritten Unterträger.

9. Funkvorrichtung (BS; UE) zum Betreiben in einem zellularen Funkkommunikationsnetzwerk (RCN), wobei die Funkvorrichtung (BS; UE) Folgendes umfasst:

- den OFDM-Modulator (1000) nach einem der Ansprüche 1 bis 4, wobei die Funkvorrichtung (BS; UE) ein Funkmodul (R1; R2) und eine Antenne (A1; A2) umfasst, die zu Folgendem ausgelegt sind:
- Aufwärtswandeln des verbundenen Abtaststroms ($g_0$, ..., $g_{A-1}$) auf die Trägerfrequenz höher als jeweilige Unterträgerfrequenzen;
- Übertragen des verbundenen Abtaststroms ($g_0$, ..., $g_{A-1}$) auf einem ersten Funkkanal (ch1; ch2); und/oder wobei die Funkvorrichtung (BS; UE) den OFDM-Demodulator (2000) nach einem der Ansprüche 5 bis 8 umfasst, wobei die Funkvorrichtung (BS; UE) das Funkmodul (R1; R2) und die Antenne (A1; A2) umfasst, die zu Folgendem ausgelegt sind:
- Empfangen eines Funksignals von einem zweiten Kanal (ch2; ch1);
- Abwärtswandeln des Funksignals auf den Eingangsabtaststrom ($h_0$, ..., $h_{A-1}$, ...).

10. Verfahren zum Betreiben eines OFDM-Modulators (1000) zum Betreiben in einer Funkvorrichtung (BS; UE) eines zellularen Funkkommunikationsnetzwerks (RCN), wobei das Verfahren Folgendes umfasst:

- Empfangen eines ersten und eines zweiten Eingangsmodulationssymbolstroms ($a_0$, ..., $a_{N-1}$, $b_0$, ..., $b_{M-1}$);
- Bestimmen einer ersten und einer zweiten inversen schnellen Fouriertransformation ($IFFT_A$, $IFFT_B$) von verschiedenen Längen (A, B) in Abhängigkeit vom ersten bzw. vom zweiten Eingangsmodulationssymbolstrom ($a_0$, ..., $a_{N-1}$, $b_0$, ..., $b_{M-1}$), wobei die zweite Blocklänge (B) der zweiten inversen schnellen Fouriertransformation ($IFFT_B$) multipliziert mit einem ganzzahligen Faktor (K) gleich der ersten Blocklänge (A) der ersten inversen schnellen Fouriertransformation ($IFFT_A$) ist;
- Bestimmen von ersten und zweiten frequenzverschobenen Abtastwerten (Sa; Sb) von verschiedenen Frequenzversätzen zu einer Unterträgerfrequenz (DC) in Abhängigkeit von der ersten bzw. der zweiten inversen schnellen Fouriertransformation ($IFFT_A$, $IFFT_B$);
- Bestimmen eines ersten und eines zweiten Ausgangsabtaststroms ($d_0$, ...$d_{A-1}$, $e_0$, ..., $e_{B-1}$) in Abhängigkeit vom ersten bzw. vom zweiten frequenzverschobenen Abtastwert (Sa; Sb);
- Bestimmen eines verbundenen Abtaststroms ($g_0$, ..., $g_{A-1}$) in Abhängigkeit vom ersten und vom zweiten Ausgangsabtaststrom ($d_0$, ..., $d_{A-1}$, $e_0$, ..., $e_{B-1}$) zum Aufwärtswandeln des verbundenen Abtaststroms ($g_0$, ..., $g_{A-1}$) auf eine Trägerfrequenz höher als jeweilige Unterträgerfrequenzen;
- Bestimmen einer inversen schnellen Fouriertransformation einer Synchronisationssequenz (SS) mit der ersten Blockgröße (A) und
- Wiederholen der Synchronisationssequenz (SS) über die verfügbare Bandbreite als ein Synchronisationssignal (PSS; SSS) für verschiedene Blocklängen und verschiedene Frequenzversätze, derart, dass das Synchronisationssymbol für die zweite inverse schnelle Fouriertransformation ($IFFT_B$) der zweiten Blocklänge, wenn der ganzzahlige Faktor (K) größer ist als eins, in Symbole von reduzierter Länge geteilt wird.

11. Verfahren zum Betreiben eines OFDM-Demodulators (2000) zum Betreiben in einer Vorrichtung (BS; UE) eines zellularen Funkkommunikationsnetzwerks (RCN), wobei das Verfahren Folgendes umfasst:

- Empfangen eines abwärtsgewandelten Abtaststroms ($h_0$, ..., $h_{A-1}$, ...);
- Bestimmen eines ersten bzw. eines zweiten Eingangsabtaststroms ($i_0$, ..., $i_{A-1}$, $k_0$, ..., $k_{B-1}$) des abwärtsgewandelten Abtaststroms ($h_0$, ..., $h_{A-1}$, ...) von verschiedenen Blocklängen (A, B) und von verschiedenen Frequenzversätzen ($-\Delta f1$, $-\Delta f2$) zu einer Unterträgerfrequenz (DC), wobei die zweite Blocklänge (B) der zweiten vorwärtigen schnellen Fouriertransformation ($FFT_B$) multipliziert mit einem ganzzahligen Faktor (K) gleich der ersten Blocklänge (A) der ersten vorwärtigen schnellen Fouriertransformation ($FFT_A$) ist;
- Bestimmen einer ersten und einer zweiten vorwärtigen schnellen Fouriertransformation ($FFT_A$, $FFT_B$) der verschiedenen Blocklängen (A, B) in Abhängigkeit vom ersten und vom zweiten Eingangsabtaststrom ($i_0$, ..., $i_{A-1}$, $k_0$, ..., $k_{B-1}$);
- Bestimmen eines ersten bzw. eines zweiten Ausgangsdemodulationssymbolstroms ($m_0$, ..., $m_{N-1}$, $n_0$, ..., $n_{M-1}$) in Abhängigkeit von der ersten bzw. der zweiten vorwärtigen schnellen Fouriertransformation ($FFT_A$, $FFT_B$);
- Bestimmen von mindestens einer Komponente eines Synchronisationssignals (PSS; SSS) in Abhängigkeit vom zweiten Ausgangsdemodulationssymbolstrom ($n_0$, ..., $n_{M-1}$), wobei das Synchronisationssignal (PSS; SSS) eine Wiederholung einer Synchronisationssequenz (SS) über die verfügbare Bandbreite für verschiedene Blocklängen und verschiedene Frequenzversätze umfasst, derart, dass ein Synchronisationssymbol für die zweite schnelle Fouriertransformation ($FFT_B$) der zweiten Blocklänge, wenn der ganzzahlige Faktor (K) größer ist als eins, in Symbole von reduzierter Länge geteilt wird.

**Revendications**

1. Modulateur à multiplexage par répartition en fréquences orthogonales, OFDM (1000) pour un fonctionnement dans un dispositif radio (BS ; UE) d'un réseau cellulaire de radiocommunications (RCN), dans lequel le modulateur OFDM (1000) comprend un processeur (P1 ; P2) et une mémoire (M1; M2) configurés pour :

   - recevoir un premier et un second flux de symboles de modulation d'entrée (ao, ..., $a_{N-1}$, bo, ..., $b_{M-1}$);
   - déterminer une première et une seconde transformée de Fourier rapide inverse ($IFFT_A$, $IFFT_B$) de différentes longueurs de bloc (A, B) en dépendance des premier et second flux de symboles de modulation d'entrée (ao, ..., $a_{N-1}$, bo, ..., $b_{M-1}$), respectivement, dans lequel la seconde longueur de bloc (B) de la seconde transformée de Fourier rapide inverse ($IFFT_B$) multipliée par un facteur entier (K) est égale à la première longueur de bloc (A) de la première transformée de Fourier rapide inverse ($IFFT_A$) ;
   - déterminer des premier et second échantillons décalés en fréquence (Sa; Sb) de différents décalages en fréquence par rapport à une fréquence de sous-porteuse (DC) en dépendance de la première et de la seconde transformée de Fourier rapide inverse ($IFFT_A$, $IFFT_B$), respectivement ;
   - déterminer un premier et un second flux d'échantillons de sortie (do, ..., $d_{A-1}$, eo, ..., $e_{B-1}$) en dépendance des premier et second échantillons décalés en fréquence (Sa ; Sb), respectivement ;
   - déterminer un flux d'échantillons joint (go, ..., $g_{A-1}$) en dépendance des premier et second flux d'échantillons décalés en fréquence (do, ..., $d_{A-1}$, eo, ..., $e_{B-1}$) pour convertir en élévation le flux d'échantillons joint ($g_0$, ..., $g_{A-1}$) en une fréquence porteuse supérieure à des fréquences de sous-porteuse respectives ;
   - déterminer une transformée de Fourier rapide inverse d'une séquence de synchronisation (SS) ayant la première longueur de bloc (A) ; et
   - répéter la séquence de synchronisation (SS) sur toute la bande passante disponible en tant que signal de synchronisation (PSS ; SSS) pour différentes longueurs de bloc et différents décalages en fréquence de sorte que, pour la seconde transformée de Fourier rapide inverse ($IFFT_B$) de la seconde longueur de bloc avec le facteur entier (K) étant supérieur à un, un symbole de synchronisation soit divisé en symboles de longueur réduite.

2. Modulateur OFDM (1000) selon la revendication 1,

   - dans lequel la première longueur de bloc (A) est égale à 2048.

3. Modulateur OFDM (1000) selon les revendications 1 ou 2, le processeur (P1 ; P2) et la mémoire (M1 ; M2) étant en outre configurés pour :

   - fonctionner avec une longueur de bloc de ressource physique de $2^X$ sous-porteuses ;
   - insérer une première pluralité de symboles de référence (RS) dans le premier flux de symboles de modulation d'entrée ($a_0$, ..., $a_{N-1}$) à chaque $2^Z$ position de sous-porteuse ;
   - insérer une seconde pluralité de symboles de référence (RS) dans le second flux de symboles de modulation d'entrée ($b_0$, ..., $b_{M-1}$) à chacune des $2^Z$ positions de sous-porteuse et à des positions supplémentaires déduites via une opération de décalage unique des $2^Z$ positions de grille.

4. Modulateur OFDM (1000) selon la revendication 1 ou 2, dans lequel le processeur (P1 ; P2) et la mémoire (M1 ; M2) sont en outre configurés pour :

   - fonctionner avec une longueur de bloc de ressource physique de 12 sous-porteuses ;
   - insérer une première pluralité de symboles de référence (RS) dans le premier symbole de modulation d'entrée d'un créneau à chaque sixième sous-porteuse ;
   - insérer une seconde pluralité de symboles de référence (RS) dans le cinquième symbole de modulation d'entrée d'un créneau à chaque troisième sous-porteuse.

5. Démodulateur OFDM (2000) pour un fonctionnement dans un dispositif (BS ; UE) d'un réseau cellulaire de radiocommunications (RCN), dans lequel le démodulateur OFDM (2000) comprend un processeur (P1 ; P2) et une mémoire (M1 ; M2) configurés pour :

   - recevoir un flux d'échantillons converti en abaissement ($h_0$, ..., $h_{A-1}$, ...) ;
   - déterminer un premier et un second flux d'échantillons d'entrée ($i_0$, ..., $i_{A-1}$, $k_0$, ..., $k_{B-1}$) du flux d'échantillons converti en abaissement ($h_0$, ..., $h_{A-1}$, ...) de différentes longueurs de bloc (A, B) et de différents décalages en fréquence (-Δf1, -Δf2) par rapport à une fréquence de sous-porteuse (DC), respectivement, dans lequel la seconde longueur de bloc (B) de la seconde transformée de Fourier rapide directe ($FFT_B$) multipliée par un facteur entier (K) est égale à la première longueur de bloc (A) de la première transformée de Fourier rapide directe ($FFT_A$) ;

- déterminer une première et une seconde transformée de Fourier rapide directe ($FFT_A$, $FFT_B$) des différentes longueurs de bloc (A, B) en dépendance des premier et second flux d'échantillons d'entrée ($i_0$, ..., $i_{A-1}$, $k_0$, ..., $k_{B-1}$) ;

- déterminer un premier et un second flux de symboles de démodulation de sortie ($m_0$, ..., $m_{N-1}$, $n_0$, ..., $n_{M-1}$) en dépendance de la première et de la seconde transformée de Fourier rapide directe ($FFT_A$, $FFT_B$), respectivement ; et

- déterminer au moins une composante d'un signal de synchronisation (PSS ; SSS) en dépendance du second flux de symboles de démodulation de sortie ($n_0$, ..., $n_{M-1}$), dans lequel le signal de synchronisation (PSS ; SSS) comprend une répétition d'une séquence de synchronisation (SS) sur toute la bande passante disponible pour différentes longueurs de bloc et différents décalages en fréquence de sorte que, pour la seconde transformée de Fourier rapide ($FFT_B$) de la seconde longueur de bloc avec le facteur entier (K) étant supérieur à un, un symbole de synchronisation soit divisé en symboles de longueur réduite.

6. Démodulateur OFDM (2000) selon la revendication 5,

    - dans lequel la première longueur de bloc (A) est égale à 2048.

7. Démodulateur OFDM (2000) selon la revendication 5 ou 6, le processeur (P1 ; P2) et la mémoire (M1 ; M2) étant en outre configurés pour :

    - fonctionner avec une longueur de bloc de ressource physique de 2^X sous-porteuses ;
    - déterminer une première pluralité de symboles de référence (RS) à partir de symboles de démodulation de sortie d'un créneau à chaque 2^Z position de sous-porteuse ;
    - déterminer une seconde pluralité de symboles de référence (RS) à partir de symboles de démodulation de sortie à chacune des 2^Z positions de sous-porteuse et à des positions supplémentaires entre les 2^Z positions de sous-porteuse déduites via une opération de décalage unique des 2^Z positions de grille.

8. Démodulateur OFDM (2000) selon la revendication 5 ou 6, le processeur (P1 ; P2) et la mémoire (M1 ; M2) étant en outre configurés pour :

    - fonctionner avec une longueur de bloc de ressource physique de 12 sous-porteuses ;
    - déterminer une première pluralité de symboles de référence (RS) à partir du premier symbole de démodulation de sortie d'un créneau à chaque sixième sous-porteuse ;
    - déterminer une seconde pluralité de symboles de référence (RS) à partir du cinquième symbole de démodulation de sortie d'un créneau à chaque troisième sous-porteuse.

9. Dispositif radio (BS ; UE) pour un fonctionnement dans un réseau cellulaire de radiocommunications (RCN), dans lequel le dispositif radio (BS ; UE) comprend :

    - le modulateur OFDM (1000) selon l'une des revendications 1 à 4, dans lequel le dispositif radio (BS ; UE) comprend un module radio (R1 ; R2) et une antenne (A1 ; A2) configurés pour :
    - convertir en élévation le flux d'échantillons joint ($g_0$, ..., $g_{A-1}$) en la fréquence porteuse supérieure aux fréquences de sous-porteuse respectives ;
    - émettre le flux d'échantillons joint ($g_0$, ..., $g_{A-1}$) sur un premier canal radio (ch1 ; ch2) ; et/ou dans lequel le dispositif radio (BS ; UE) comprend le démodulateur OFDM (2000) selon l'une des revendications 5 à 8, dans lequel le dispositif radio (BS ; UE) comprend le module radio (R1 ; R2) et l'antenne (A1 ; A2) configurés pour :
    - recevoir un signal radio à partir d'un second canal (ch2 ; ch1) ;
    - convertir en abaissement le signal radio en le flux d'échantillons d'entrée ($h_0$, ..., $h_{A-1}$, ...).

10. Procédé pour faire fonctionner un modulateur OFDM (1000) pour un fonctionnement dans un dispositif radio (BS ; UE) d'un réseau cellulaire de radiocommunications (RCN), dans lequel le procédé comprend :

    - la réception d'un premier et d'un second flux de symboles de modulation d'entrée ($a_0$, ..., $a_{N-1}$, $b_0$, ..., $b_{M-1}$) ;
    - la détermination d'une première et d'une seconde transformée de Fourier rapide inverse ($IFFT_A$, $IFFT_B$) de différentes longueurs (A, B) en dépendance des premier et second flux de symboles de modulation d'entrée ($a_0$, ..., $a_{N-1}$, $b_0$, ..., $b_{M-1}$), respectivement, dans lequel la seconde longueur de bloc (B) de la seconde transformée de Fourier rapide inverse ($IFFT_B$) multipliée par un facteur entier (K) est égale à la première longueur de bloc (A) de la première transformée de Fourier rapide inverse ($IFFT_A$) ;

- la détermination de premier et second échantillons décalés en fréquence (Sa ; Sb) de différents décalages en fréquence par rapport à une fréquence de sous-porteuse (DC) en dépendance de la première et de la seconde transformée de Fourier rapide inverse ($IFFT_A$, $IFFT_B$), respectivement ;

- la détermination d'un premier et d'un second flux d'échantillons de sortie ($d_0$, ..., $d_{A-1}$, $e_0$, ..., $e_{B-1}$) en dépendance des premier et second échantillons décalés en fréquence (Sa ; Sb), respectivement ;

- la détermination d'un flux d'échantillons joint ($g_0$, ..., $g_{A-1}$) en dépendance des premier et second flux d'échantillons de sortie ($d_0$, ..., $d_{A-1}$, $e_0$, ..., $e_{B-1}$) pour convertir en élévation le flux d'échantillons joint ($g_0$, ..., $g_{A-1}$) en une fréquence porteuse supérieure à des fréquences de sous-porteuse respectives ;

- la détermination d'une transformée de Fourier rapide inverse d'une séquence de synchronisation (SS) ayant la première taille de bloc (A) ; et

- la répétition de la séquence de synchronisation (SS) sur toute la bande passante disponible en tant que signal de synchronisation (PSS ; SSS) pour différentes longueurs de bloc et différents décalages en fréquence de sorte que, pour la seconde transformée de Fourier rapide inverse ($IFFT_B$) de la seconde longueur de bloc avec le facteur entier (K) étant supérieur à un, un symbole de synchronisation soit divisé en symboles de longueur réduite.

11. Procédé pour faire fonctionner un démodulateur OFDM (2000) pour un fonctionnement dans un dispositif (BS ; UE) d'un réseau cellulaire de radiocommunications (RCN), dans lequel le procédé comprend :

- la réception d'un flux d'échantillons converti en abaissement ($h_0$, ..., $h_{A-1}$, ...) ;

- la détermination d'un premier et d'un second flux d'échantillons d'entrée ($i_0$, ..., $i_{A-1}$, $k_0$, ..., $k_{B-1}$) du flux d'échantillons converti en abaissement ($h_0$, ..., $h_{A-1}$, ...) de longueur de bloc (A, B) différente et de décalage en fréquence ($-\Delta f1$, $-\Delta f2$) différent par rapport à une fréquence de sous-porteuse (DC), respectivement, dans lequel la seconde longueur de bloc (B) de la seconde transformée de Fourier rapide directe ($FFT_B$) multipliée par un facteur entier (K) est égale à la première longueur de bloc (A) de la première transformée de Fourier rapide directe ($FFT_A$) ;

- la détermination d'une première et d'une seconde transformée de Fourier rapide directe ($FFT_A$, $FFT_B$) de la longueur de bloc (A, B) différente en dépendance des premier et second flux d'échantillons d'entrée ($i_0$, ..., $i_{A-1}$, $k_0$, ..., $k_{B-1}$) ;

- la détermination d'un premier et d'un second flux de symboles de démodulation de sortie ($m_0$, ..., $m_{N-1}$, $n_0$, ..., $n_{M-1}$) en dépendance de la première et de la seconde transformée de Fourier rapide directe ($FFT_A$, $FFT_B$), respectivement ;

- la détermination d'au moins une composante d'un signal de synchronisation (PSS ; SSS) en dépendance du second flux de symboles de démodulation de sortie ($n_0$, ..., $n_{M-1}$), dans lequel le signal de synchronisation (PSS ; SSS) comprend une répétition d'une séquence de synchronisation (SS) sur toute la bande passante disponible pour différentes longueurs de bloc et différents décalages en fréquence de sorte que, pour la seconde transformée de Fourier rapide ($FFT_B$) de la seconde longueur de bloc avec le facteur entier (K) étant supérieur à un, un symbole de synchronisation soit divisé en symboles de longueur réduite.

Fig. 1a

Fig. 1b

1800

| receiving a first and second<br>ingress modulation-symbol<br>stream |
| --- |
1802

| determining a first and second inverse Fast Fourier Transform<br>of different lengths in dependence on the first and<br>second ingress modulation-symbol stream, respectively |
| --- |
1804

| determine first and second frequency-shifted samples of<br>different frequency offsets to a subcarrier frequency in dependence on<br>the first and second inverse Fast Fourier Transform, respectively |
| --- |
1805

| determining a first and second egress sample stream in dependence on<br>the first and second frequency-shifted samples, respectively |
| --- |
1806

| determining a joined sample stream in dependence on the first and second<br>egress sample stream for up-converting the joined sample stream<br>to a carrier frequency higher than respective subcarrier frequencies |
| --- |
1808

Fig. 1c

2800

2802 | receiving a down-converted sample stream

2804 | determining a first and second ingress sample stream of the down-converted sample stream of different block length and of different frequency offset to a subcarrier frequency, respectively

2806 | determining a first and second forward Fast Fourier Transform of the different block length in dependence on the first and second ingress sample stream

2808 | determine a first and second egress demodulation-symbol stream in dependence on the first and second forward Fast Fourier Transform, respectively

Fig. 1d

Fig. 2

Fig. 3

Fig. 4

1300  1400  1200  1000

1318  1418  1218  1100

IFFT64  IFFT128  IFFT128  . . .  IFFT2048 ─1118

$e^{j2\pi\Delta f_1 t}$  $e^{j2\pi\Delta f_2 t}$  $e^{j2\pi\Delta f_3 t}$  . . .  ┌─ ─ ─ ─┐ ─1116

1316  1416  + ─1902  1216

$g_0, ..., g_{A-1}$

Fig. 5

2000

2310  2410  2210  $h_0, ..., h_{A-1}$  2100

$e^{j2\pi\Delta f_1 t}$  $e^{j2\pi\Delta f_2 t}$  $e^{j2\pi\Delta f_3 t}$  . . .  ┌─ ─ ─ ─┐ ─2110

FFT64  FFT128  FFT128  . . .  FFT2048

Fig. 6

$g_0, ..., g_{A-1}$

IFFT 2048

+  IFFT 64  IFFT 64

+  IFFT 128  IFFT 128

+  IFFT 128  IFFT 128

64  128  256  t-samples  2048

OFDM$_{128}$

OFDM$_{2048}$

Fig. 7

Fig. 8

Fig. 9

Fig. 10

$g_0, ..., g_{A-1}$

DC carrier

$\Delta f2$

Fig. 11

f/Hz

18 PRBS FFT 2048

32 PRBS FFT 64

16 PRBS FFT 128

16 PRBS FFT 128

18 PRBS FFT 2048

50 PRBS

50 PRBS

Time t/s

66,0 μs

2,1 μs

4,2 μs

4,2 μs

EP 3 337 114 B1

RB 1

12 SC

DC                    51 zeros

→ 1318

RB 1

12 SC

DC                    115 zeros

→ 1218

→ 1418

RB 50'        RB 1'        RB 1        RB 50

12 SC        12 SC        12 SC        12 SC

424 zeros        600 SC        DC        600 SC        423 zeros

→ 1118

Fig. 12

Fig. 13

Fig. 14

EP 3 337 114 B1

Fig. 15

EP 3 337 114 B1

Fig. 16

Fig. 17

K = 1 -> 16 RS

K = 4 -> 16 RS

K = 8 -> 16 RS

EP 3 337 114 B1

BS UE

schedule downlink
transmission 18_1

transmit a downlink
scheduling decision
indicating at least
one pair of Δf, block length

18_2

modulate downlink
data with
Δf, block length 18_3

transmit downlink
data

18_4

demodulate downlink
data in dependence
on Δf and block length 18_5

Fig. 18

BS              UE

schedule uplink
transmission     19_1

transmit an uplink
scheduling decision
indicating at least
one pair of $\Delta f$, block length

19_2

modulate uplink
data with
$\Delta f$, block length     19_3

transmit uplink
data

19_4

demodulate uplink
data in dependence
on $\Delta f$ and block length

19_5

Fig. 19

Fig. 20

$m_0, m_1, m_2, \ldots a_{N-1}$

$n_0, n_1, n_2, \ldots n_{M-1}$

2500

$o_0, o_1, o_2, \ldots o_{P-1}$

1108
broadband data
(less time critical)

1208
narrowband data
(time critical, high reliability)

1308
narrowband data
(time critical)

Fig. 21

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2016352551 A

**Non-patent literature cited in the description**

- **HUAWEI et al.** Initial access in NR. *3GPP TSG-RAN WG2 Meeting #94,* 27 May 2016